# EUROPÄISCHE PATENTSCHRIFT

(11) **EP 3 515 964 B1**
(45) Veröffentlichungstag und Bekanntmachung des Hinweises auf die Patenterteilung: **07.07.2021**
(21) Anmeldenummer: 17771412.8
(22) Anmeldetag: 18.09.2017
(51) Int. Cl.: C08G 64/06, C08K 5/00, B29C 45/00

(54) **TRANSPARENTE FORMTEILE MIT GERINGER DICKE**
TRANSPARENT MOULDED PARTS WITH LOW THICKNESS
PIÈCES DE FORMAGE TRANSPARENTES AYANT UNE FAIBLE ÉPAISSEUR

(30) Priorität: 22.09.2016 EP 16190085
(43) Veröffentlichungstag der Anmeldung: 31.07.2019
(73) Patentinhaber: Covestro Intellectual Property GmbH & Co. KG, 51373 Leverkusen (DE)
(72) Erfinder: DÖBLER, Martin, 40593 Düsseldorf (DE); WEHRMANN, Rolf, 47800 Krefeld (DE); BOUMANS, Anke, 47574 Goch (DE); WINKLER, Lucia, 42929 Wermelskirchen (DE); BURGER, Martin, 42659 Solingen (DE)
(74) Vertreter: Levpat
(86) Internationale Anmeldenummer: PCT/EP2017/073506
(87) Internationale Veröffentlichungsnummer: WO 2018/054847

(56) Entgegenhaltungen:
- WO-A1-2017/103766
- DE-T2-602004 005 730
- JP-A- 2012 219 177
- US-A1- 2007 155 867
- US-A1- 2013 216 801

## Beschreibung

Die vorliegende Erfindung betrifft die Verwendung spezieller PolycarbonatZusammensetzungen mit dem Zweck, das Fließweg-zu-Wanddickenverhältnis bei der Herstellung transparenter Formteile, bevorzugt Leuchtenabdeckungen, insbesondere einer Scheinwerferabdeckung, mittels Spritzguss zu verbessern. Dieses ist insbesondere für die Herstellung von Leuchtenabdeckungen für Hauptscheinwerfer von Kfz relevant. Die vorliegende Erfindung betrifft daher auch entsprechende transparente Formteile, bevorzugt Leuchtenabdeckungen, insbesondere Scheinwerferabdeckungen, Scheinwerfer, umfassend diese Scheinwerferabdeckungen und eine LED-Lichtquelle, sowie ein Verfahren zur Herstellung der transparenten Formteile und insbesondere Scheinwerferabdeckungen.

Moderne Frontscheinwerfer in Kraftfahrzeugen umfassen in der Regel ein oder mehrere Leuchtmittel, optische Elemente im Scheinwerferinneren wie Linsen oder Reflektoren, welche das gewünschte Lichtprofil erzeugen, diverse Zierelemente im Scheinwerferinneren und eine transparente Abdeckung.

Die transparenten Abdeckungen moderner Autoscheinwerfer sind aus Gewichtsgründen aber auch Gründen der Designfreiheit fast ausschließlich aus Thermoplasten hergestellt. Für die Frontscheinwerfer besteht zusätzlich noch eine hohe mechanische Belastung durch Steinschlag und Sandabrieb. Daher haben sich kratzfestlackierte Abdeckungen aus Polycarbonat durchgesetzt. Diese Anwendung ist bekannt und in der Literatur beschrieben (z.B. DE 2 826 087 A1).

Nachteilig an den bekannten Polycarbonat-basierten Scheinwerferabdeckungen ist, dass ihre Wanddicke nicht beliebig dünn sein kann. Dies ist dadurch bedingt, dass das Polycarbonat an sich ein gewisses Molekulargewicht aufweisen muss, um der Scheinwerferabdeckung ausreichende mechanische Eigenschaften wie Steinschlagfestigkeit sowie Wärmeformbeständigkeit zu verleihen. Dieses Molekulargewicht führt jedoch dazu, dass die Viskosität der Polycarbonatschmelze so hoch ist, dass das Verhältnis des Fließwegs der Polycarbonatschmelze zur gewünschten resultierenden Wanddicke des Formteils auf ca. 150 begrenzt ist. Dies ist dem Fachmann bekannt und wird auch in technischen Datenblättern wie beispielsweise KU28012-0501 de Makrolon® AL2447 und Makrolon® AL2647 beschrieben.

Ein begrenzter Fließweg bei geringer Wanddicke führt zum einen dazu, dass Formteile einer gewissen Größe gar nicht per Standard-Spritzguss hergestellt werden können, da die Fließfront nicht weit genug fließt, um die Kavität auszufüllen. Alternative Technologien wie bspw. ein Angusssystem frontal in der Mitte einer Abdeckung an Stelle eines seitlichen Angusses führen zu optischen und mechanischen Einbußen, die deutlich schlechter als heutige Abdeckungen wären und daher nicht in Frage kommen. Ferner sind variotherme Spritzgussverfahren bekannt (beispielsweise von der Firma Roctool), bei denen durch eine dynamische Werkzeugtemperierung während des Spritzgusszyklus eine Verlängerung des Fließweges möglich wird. Diese Verfahren sind aber sehr aufwendig und energieintensiv. Zudem können auch bei diesem Verfahren Formteile erhalten werden, welche nicht allen optischen Anforderungen gerecht werden.

Des Weiteren können durch Spritzprägeverfahren mit speziellen Prägewerkzeugen die Fließwege verlängert werden, indem beim Einspritzen das Werkzeug nicht völlig geschlossen wird und somit das Kavitätenvolumen vergrößert wird. Erst zum Ende der Einspritzphase wird das Werkzeug geschlossen, wobei das Formteil unter dem Schließdruck ausgeformt wird. Die Umsetzung dieses Verfahrens ist sehr aufwendig und nicht bei jeder beliebigen Formteilgeometrie anwendbar.

Versuche zur Erhöhung des Einspritzdrucks beim konventionellen Spritzguss bei der Herstellung von dünneren Formteilen schlugen fehl, da dieses zu höheren inneren eingefrorenen Spannungen nach dem Spritzguss und damit zu nicht akzeptabler verringerter Haltbarkeit der Formteile führte. Ebenso sind die gängigen auf dem Markt befindlichen Polycarbonatzusammensetzungen nur bei Einspritztemperaturen ("Massetemperatur") von um die 300 °C zu verwenden, da sonst eine partielle Zersetzung der Polymere und Farbveränderung zu beobachten ist. Dies führt wiederum zu Formteilen mit verschlechterten mechanischen und optischen Eigenschaften.

In der DE 60 2004 005 730 T2 wird die Herstellung einer 3 mm dicken Automobilscheinwerferlinse beschrieben, bei der eine Mischung eines Polycarbonatharzes mit einem Molekulargewicht M_{w} von 29.900 g/mol und eines Polycarbonatharzes mit einem Molekulargewicht M_{w} von 21.900 g/mol als Polycarbonat verwendet wird. Dieser Mischung wird der UV-Stabilisator 2-(2H-Benzotriazol-2-yl-4-(1,1,3,3-tetramethylbutyl)phenol zu 0,27 Gew.-%, bezogen auf das Gesamtgewicht der Polycarbonatzusammensetzung, zugesetzt. Die Platten wurden gemäß den Standardverarbeitungsbedingungen, wie sie für das Material in dem technischen Datenblatt definiert sind, geformt. Als Vergleich wurde das Produkt LEXAN® LS2 verwendet, welches gemäß Datenblatt ebenfalls UV-stabilisiert ist.

Eine ähnliche Zusammensetzung wird auch in der DE 603 17 054 T2 offenbart (Mischung eines Polycarbonatharzes mit einem Molekulargewicht M_{w} von 29.900 g/mol und eines Polycarbonatharzes mit einem Molekulargewicht M_{w} von 21.900 g/mol, Zugabe von 0,27 Gew.-% 2-(2H-Benzotriazol-2-yl-4-(1,1,3,3-tetramethylbutyl)phenol).

Auch die EP 0 779 327 A1 beschreibt die Verwendung von UV-stabilisiertem LEXAN® LS2 als Substrat für Scheinwerferabdeckungen.

Viele Dokumente des Stands der Technik setzen den Fokus auf die Verbesserung der Eigenschaften von Polycarbonatformteilen durch beispielsweise zusätzliche Beschichtungen (siehe beispielsweise DE 2 826 087 A1, DE 100 18 935 A1, DE 693 17 237 T2, EP 1 164 005 A1 und WO 99/59793 A1).

Keines dieser Dokumente trifft Aussagen dazu, wie möglichst dünne Formteile zwecks Gewichtseinsparung bei gleichbleibenden mechanischen und optischen Eigenschaften hergestellt werden können.

WO 2017/103766 A1 offenbart transparente Formteile mit einer Wandstärke von 2,5 mm aus einer auf einem aromatischen Polycarbonat basierenden Zusammensetzung, enthaltend zwei Bisphenol A-basierte Polycarbonate mit mittleren gewichtsmittleren Molekulargewichten M_{W} von 21800 und 30000, bestimmt mittels Gelpermeationschromatographie, kalibiert gegen Bisphenol A-Standrads, und 0 bzw. 0,15 Gew.-% eines US-Absorbers.

Ausgehend von diesem Stand der Technik lag der vorliegenden Erfindung die Aufgabe zu Grunde, mindestens einen, bevorzugt alle Nachteile des Stands der Technik zu beheben. Insbesondere lag der vorliegenden Erfindung die Aufgabe zu Grunde, ein gegenüber herkömmlich insbesondere für Scheinwerfer bzw. Scheinwerferabdeckungen verwendeten Polycarbonatzusammensetzungen erhöhtes Fließweg-zu-Wanddickenverhältnis zu erzielen, so dass sich möglichst geringe Wanddicken erzielen lassen, dabei aber möglichst keine Verschlechterung der mechanischen und/oder optischen Eigenschaften des Formteils resultiert. Des Weiteren war die bevorzugte Aufgabe der vorliegenden Erfindung, ein Formteil, insbesondere eine Scheinwerferabdeckung, bereitzustellen, welches eine Dicke von höchstens 3 mm, bevorzugt höchstens 2,9 mm aufweist, vorzugsweise dünner ist als 2,5 mm, insbesondere dünner als 2 mm und dabei gleichzeitig die Anforderungen an eine Scheinwerferabdeckung eines Kraftfahrzeugs in mechanischer und optischer Hinsicht erfüllt. Dabei sollen insbesondere die optischen Eigenschaften in Bezug auf die Transmission, bevorzugt bei 400 nm, die Farbe, die Resttrübung und/oder mit dem Auge wahrnehmbare Fehlstellen beibehalten, bevorzugt verbessert werden. Besonders bevorzugt sollen alle diese optischen Eigenschaften beibehalten, bevorzugt verbessert werden. Bei den mechanischen Eigenschaften soll insbesondere die Steinschlagfestigkeit und/oder die Wärmeformbeständigkeit beibehalten, bevorzugt verbessert werden.

Zum Teil oder ganz gelöst wurden diese Aufgaben durch Verwendung einer auf Polycarbonat basierenden Zusammensetzung A, enthaltend
a) aromatisches Polycarbonat, wobei das Polycarbonat ein mittleres gewichtsmittleres Molekulargewicht M_{w} von 22.000 g/mol bis 27.000 g/mol, bestimmt mittels Gelpermeationschromotographie nach DIN 55672-1:2007-08, kalibriert gegen Bisphenol A-Polycarbonat-Standards unter Verwendung von Dichlormethan als Elutionsmittel, aufweist und wobei das Polycarbonat 0 bis 19 mol% Carbonat-Einheiten der Formel (1) 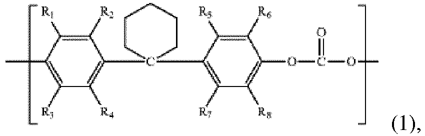 wobei R₁, R₂, R₃, R₄, R₅, R₆, R₇ und R₈ unabhängig voneinander H oder C₁- bis C₆-Alkyl bedeuten, aufweist, bevorzugt frei ist von Carbonat-Einheiten der Formel (1), und
b) 0 bis weniger als 0,2 Gew.-% eines UV-Absorbers oder einer UV-Absorbermischung, bezogen auf das Gesamtgewicht der Polycarbonatzusammensetzung,
   zur Erhöhung des Fließweg-zu-Wanddickenverhältnisses bei der Herstellung eines transparenten Formteils, bevorzugt einer Leuchtenabdeckung, besonders bevorzugt einer Scheinwerferabdeckung, insbesondere für ein Kfz, mittels Spritzguss.

Bevorzugt werden dabei Fließweg-zu-Wanddicken-Verhältnisse von 180 bis 500 erzielt, weiter bevorzugt von 250 bis 500.

Carbonat-Einheiten der Formel (1) werden beispielsweise aus aromatischen Diolen wie 4,4'-Cyclohexyliden-Bisphenol (Bisphenol-Z) erhalten.

Das Polycarbonat ist weiter bevorzugt auch frei von Siloxaneinheiten.

Besonders bevorzugt weist das Polycarbonat mehr als 80 mol%, ganz besonders bevorzugt mindestens 90 mol%, insbesondere mindestens 95 mol%, noch weiter bevorzugt mindestens 98 mol%, äußerst bevorzugt ausschließlich auf Bisphenol-A basierende Carbonat-Einheiten auf, bezogen auf die Gesamtmenge an Carbonat-Einheiten.

Der Vergleich bezieht sich auf das erreichbare Fließweg-zu-Wanddickenverhältnis für eine Zusammensetzung A gegenüber dem erreichbaren Fließweg-zu-Wanddickenverhältnis für eine ansonsten analoge Zusammensetzung B, die mindestens 0,2 Gew.-% eines UV-Absorbers oder einer UV-Absorbermischung enthält.

Auf "Polycarbonat basierend" oder "Polycarbonatzusammensetzung" bedeutet vorliegend und an allen anderen Stellen der Erfindungsbeschreibung, dass die Polymerkomponente, welche den wesentlichen Anteil aller Komponenten der Gesamtzusammensetzung darstellt, Polycarbonat, bevorzugt aromatisches Polycarbonat, ganz besonders bevorzug Bisphenol A-basiertes Polycarbonat, einen Anteil von bevorzugt mindestens 80 Gew.-%, weiter bevorzugt mindestens 90 Gew.-%, besonders bevorzugt mindestens 94 Gew.-%, ganz bevorzugt mindestens 98 Gew.-% Polycarbonat, insbesondere Bisphenol-A-basiertes Polycarbonat, bezogen auf die Gesamtzusammensetzung, ausmacht.

Das angegebene Molekulargewicht M_{w} bezieht sich auf das mittlere Molekulargewicht M_{w} sämtlicher in der auf Polycarbonat basierenden Zusammensetzung enthaltenen Polycarbonate, d.h. das angegebene gewichtsmittlere Molekulargewicht betrifft den Durchschnittswert von M_{w} aller Polycarbonate. So kann beispielsweise zum Einbringen von Additiven ein Polycarbonatpulver verwendet werden, das ein gewichtsmittleres Molekulargewicht außerhalb des angegebenen Bereiches aufweist, solange nur das durchschnittliche Molekulargewicht des enthaltenen Polycarbonats in dem angegebenen Bereich liegt. Bevorzugt ist neben dem Polycarbonat in der Zusammensetzung kein weiteres Polymer enthalten.

Überraschenderweise wurde gefunden, dass das Fließweg-zu-Wanddicken-Verhältnis erhöht werden kann, wenn der Gehalt an UV-Absorber oder UV-Absorbergemisch minimiert wird. Entgegen den Erwartungen sind so bei der Herstellung der Formteile höhere Temperaturen der Polycarbonatschmelze realisierbar, wobei sowohl die mechanischen als auch die optischen Eigenschaften des resultierenden Formteils hervorragend sind. Insbesondere sind die Formteile für den Einsatz als Leuchtenabdeckungen, ganz besonders bevorzugt für Scheinwerferabdeckungen geeignet. Dabei ist insbesondere die Kombination dieser Scheinwerferabdeckungen mit LED- oder Laserlicht als Scheinwerferlicht vorteilhaft, da für dieses Licht kein UV-Schutz benötigt wird. Zum Schutz vor Sonnenbestrahlung kann beispielsweise eine UV-Absorber-haltige Kratzfestschicht aufgebracht werden.

Das höhere erzielbare Fließweg-zu-Wanddicken-Verhältnis führt dazu, dass durch den verlängerten Fließweg auch große und dabei dünne Formteile problemlos mittels Spritzguss realisiert werden können. Somit sind erfindungsgemäße Formteile nahezu unabhängig von ihrer Größe und Ausgestaltung flexibler und gleichzeitig dünn herstellbar. Mit dem erhöhten Fließweg-zu-Wanddickenverhältnis ist somit die Möglichkeit einer Gewichtseinsparung bei Bauteilen, insbesondere bei Scheinwerferabdeckungen, verbunden. Die Verweilzeit der Schmelze in der Spritzgussmaschine sollte bevorzugt, wie dem Fachmann bekannt, möglichst kurz gehalten werden.

Gegenstand der Erfindung ist daher auch die Verwendung eines transparenten Formteils, bevorzugt eine Leuchtenabdeckung, insbesondere eine Scheinwerferabdeckung, insbesondere für einen Hauptscheinwerfer eines Kfz, insbesondere eines Autos oder eines LKW, mit einer Wanddicke von maximal 3 mm, bevorzugt maximal 2,9 mm, weiter bevorzugt von maximal 2,2 mm, noch weiter bevorzugt von maximal 1,9 mm, besonders bevorzugt von maximal 1,6 mm, ganz besonders bevorzugt von maximal 1,5 mm, aus einer auf aromatischem Polycarbonat basierenden Zusammensetzung, enthaltend ein Polycarbonat mit einem gewichtsmittleren Molekulargewicht M_{w} von 22.000 g/mol bis 27.000 g/mol, bestimmt mittels Gelpermeationschromotographie nach DIN 55672-1:2007-08, kalibriert gegen Bisphenol A-Polycarbonat-Standards unter Verwendung von Dichlormethan als Elutionsmittel, wobei das Polycarbonat 0 bis höchstens 19 mol% Carbonat-Einheiten der Formel (1) 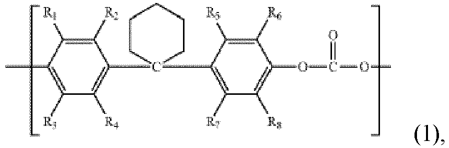 wobei R₁, R₂, R₃, R₄, R₅, R₆, R₇ und R₈ unabhängig voneinander H oder C₁- bis C₆-Alkyl bedeuten, aufweist, bevorzugt frei ist von Carbonat-Einheiten der Formel (1), und enthaltend weniger als 0,2 Gew.-% eines UV-Absorbers oder einer UV-Absorbermischung. Die äußerst geringen Dicken ließen sich bisher mit den im Stand der Technik für Scheinwerferabdeckungen genutzten Zusammensetzungen insbesondere bei Hauptscheinwerfern nicht erreichen. Analoges gilt für andere transparente Formteile einer gewissen Fläche, insbesondere auch aus dem Bereich der Verscheibungen, bei denen erfindungsgemäße Fließweg-zu-Wanddicken-Verhältnisse bisher nicht erzielt wurden.

Ebenso betrifft die Erfindung die Verwendung der erfindungsgemäßen zu verwendenden Zusammensetzung für ein Formteil, das als Scheinwerferabdeckung ausgestaltet ist, insbesondere in Kombination mit einer LED-Lichtquelle oder einer Laserlichtquelle, bevorzugt einer LED-Lichtquelle. Zudem wurde gefunden, dass die erhöhten Verarbeitungstemperaturen bei der Herstellung der erfindungsgemäßen Formteile vorteilhaft beim Spritzgussprozess an sich sind. Beispielsweise können so Formteile mit weniger Bindenähten erhalten werden. Bindenähte sind sowohl hinsichtlich optischer als auch mechanischer Eigenschaften bei Formteilen nachteilig. Eine solche höhere Temperatur beim Spritzguss kann sich auch zusätzlich vorteilhaft hinsichtlich Vermeiden von Fließmarkierungen, eingefrorenen Spannungen und anderen Spritzgussfehlern auswirken.

Dies bedeutet zum einen, dass durch die Minimierung des Gehalts an UV-Absorber oder UV-Absorbergemisch Polycarbonatschmelzen eingesetzt werden, welche einen geringeren Abbau des Polycarbonats aufweisen als vergleichbare Polycarbonatschmelzen mit höheren Anteilen an UV-Absorber oder UV-Absorbergemisch. Daher können die erfindungsgemäß eingesetzten Polycarbonatschmelzen höher erhitzt werden bei vergleichbaren, bevorzugt geringerem Abbau des Polycarbonats als vergleichbare Polycarbonatschmelzen mit höheren Anteilen an UV-Absorber oder UV-Absorbergemisch. Dies führt dazu, dass Formteile erhalten werden, welche dünnwandig sind und dabei die gleichen mechanischen Eigenschaften, bevorzugt bessere mechanische Eigenschaften, aufweisen als vergleichbare Formteile mit höheren Anteilen an UV-Absorber oder UV-Absorbergemisch. Hierbei wird bevorzugt die Steinschlagfestigkeit beibehalten bzw. verbessert.

Zum anderen können die Formteile weiterhin hervorragende optische Eigenschaften aufweisen. Für Leuchtenabdeckungen, insbesondere für Scheinwerferabdeckungen, besonders wichtige Parameter sind optische Eigenschaften in Bezug auf die Transmission, bevorzugt bei 400 nm, die Farbe, die Resttrübung und/oder mit dem Auge wahrnehmbare Fehlstellen. Bei der Transmission spielen die Transmission Ty im sichtbaren Bereich sowie auch die Transmission bei 400 nm, beide vorzugsweise bestimmt nach ISO13468-2 2006-07 bei einer Schichtdicke von 4 mm, eine Rolle. Die Transmission bei 400 nm gibt das Ausmaß an Vergilbung an. Die erfindungsgemäß erhaltenen Formteile weisen bei dünner Wanddicke die gleichen, bevorzugt verbesserte, optische Eigenschaften auf im Vergleich zu Formteilen mit höheren Anteilen an UV-Absorber oder UV-Absorbergemisch. Insbesondere weisen die erfindungsgemäß erhaltenen Formteile mit verbessertem Fließweg-zu-Wanddickenverhältnis trotz des hohen Fließweg-zu-Wanddicken-Verhältnisses, welches bevorzugt durch Temperaturen der Polycarbonatschmelze oberhalb von 300 °C erzielt wird, die gleichen, bevorzugt verbesserte optische Eigenschaften auf im Vergleich zu Formteilen aus Polycarbonatschmelzen mit höheren Anteilen an UV-Absorber oder UV-Absorbergemisch. Polycarbonatschmelzen mit höherem Anteil an UV-Absorber oder UV-Absorbergemisch, welche auf Temperaturen von oberhalb 300 °C erhitzt werden, resultieren in Formteilen mit einem etwas erhöhten Gelbstich. Dieser kann insbesondere durch einen niedrigen Wert der Transmission bei 400 nm nachgewiesen werden. Ein solcher Gelbstich kann erfindungsgemäß minimiert werden.

Erfindungsgemäß wird das "Fließweg-zu-Wanddicken-Verhältnis" wie folgt definiert: Der Fließweg ist die längste Strecke innerhalb eines bestimmten Formteils, welche die Polymerschmelze vom Anschnitt weg zurücklegen muss, um das Formteil vollständig zu füllen. Der Fließweg wird in mm angegeben. Er wird an der erstarrten Polycarbonatschmelze, d. h. dem fertigen Bauteil, gemessen. Durch dreidimensionale Ausgestaltungen des Formteils kann der Fließweg länger sein als die direkte Verbindung vom Anschnitt zum am weitesten entfernten Punkt des Formteils. Dabei kann es hilfreich sein, wenn der Fließweg mittels handelsüblicher Simulationssoftware bestimmt wird. Alternativ kann der Fließweg auch mittels einer Füllreihe experimentell bestimmt werden. Besonders bevorzugt wird der Fließweg simuliert. Dabei ist es insbesondere bevorzugt, wenn die Software Autodesk® Moldflow® verwendet wird. Besonders bevorzugt wird die Version AMI2016 P3, ganz besonders bevorzugt die Version AMI2018.1 dieser Software verwendet. Das Verfahren zur Bestimmung des Fließweges ist dem Fachmann geläufig. Alle dem Fachmann bekannten Angussarten sind prinzipiell geeignet, z.B. Punktanguss, Tunnelanguss oder Filmanguss. Bevorzugt werden Filmangusssysteme verwendet. Handelt es sich um Angusssysteme, bei denen eine breite Schmelzefront (und kein Punkt) vorliegt, so wird der Fließweg weiterhin durch die längste Strecke innerhalb des Formteils festgelegt. Dabei geht man von einer radialen Verteilung der Schmelze vom Anschnitt aus. Auch in diesem Fall kann der Fließweg durch handelsübliche Simulationssoftware bestimmt werden. Besonders bevorzugt wird er ausgehend vom Anschnitt bis hin zu dem Punkt des Formteils bestimmt, welcher am weitesten von diesem Punkt entfernt ist.

Die Werkzeugtemperatur wird der zu verwendenden Polycarbonatzusammensetzung angepasst. Sie beträgt dabei bevorzugt 60-160 °C, besonders bevorzugt 80-120°C und insbesondere bevorzugt 90-110 °C. Dabei ist die Temperatur des Werkzeugs bevorzugt konstant.

Die Wanddicke des Formteils wird vorzugsweise im Wesentlichen konstant gestaltet, um Fließstörungen zu vermeiden. Typischerweise wird versucht, die Schwankung bei kleiner als +/-1% zu halten. Jedoch sind Bereiche wie der Rand oder Befestigungselemente wie Klipse und Schraubdome eines Formteils oft von anderer Wanddicke. Im Sinne dieser Anmeldung soll man daher unter der Wanddicke eines Formteils bevorzugt die dominierende Wanddicke verstanden wissen. Als dominierende Wanddicke wird die Wanddicke verstanden, welche mindestens 70 %, bevorzugt mindestens 75 %, besonders bevorzugt mindestens 80 % der Fläche des Formteils ausmacht. Die Wanddicke wird an der erstarrten Polymerschmelze, d. h. dem fertigen Bauteil, bestimmt.

Zur Herstellung des transparenten Formteils, bevorzugt der Leuchtenabdeckung, besonders bevorzugt der Scheinwerferabdeckung, insbesondere für Kfz, wird die Polycarbonatschmelze bevorzugt auf eine Temperatur von größer 300 bis 380 °C, besonders bevorzugt größer 320 °C bis 360 °C erwärmt, ganz besonders bevorzugt auf eine Temperatur von 330 bis 360°C, insbesondere größer 330°C bis 360°C. Ebenso bevorzugt wird ein Werkzeuginnendruck (Fülldruck) von maximal 1500 bar, bevorzugt maximal 1000 bar verwendet. Diese Größen haben somit Auswirkung auf das erzielbare Fließweg-zu-Wanddickenverhältnis. Mit herkömmlichen, für transparente Leuchtenabdeckungen verwendeten UV-Absorber-haltigen Zusammensetzungen konnten die erfindungsgemäß erzielbaren Fließweg-zu-Wanddicken-Verhältnisse nicht umgesetzt werden, da sich keine Bauteile mit ausreichenden optischen Eigenschaften erzielen ließen. Die Einspritzgeschwindigkeit hängt vom zu spritzenden Bauteil ab. Ihre Bestimmung liegt im Wissen und Können des Fachmanns. Die Werkzeugtemperatur liegt bevorzugt bei 100 bis 110°C.

Das Fließweg-zu-Wanddicken-Verhältnis wird bestimmt, indem der Fließweg durch die längste Strecke der Fließfront vom Mittelpunkt des Filmangusses bis zum am weitesten entfernten, erreichten Punkt der Fließfront bestimmt wird und dieser Fließweg in mm durch die dominierende Wanddicke in mm, dividiert wird.

Formteile aus der beschriebenen Zusammensetzung können auch Teil eines Mehrkomponentenspritzguss-Bauteils sein. Das heißt vorzugsweise, das genannte Formteil wird an ein Formteil mindestens eines weiteren Thermoplasten angespritzt und/oder nachträglich mit mindestens einem anderen Thermoplasten umspritzt. Dies kann auch in einem Mehrkomponentenspritzgusswerkzeug erfolgen. Der oder die weiteren Thermoplasten können die gleiche oder unterschiedliche chemische Natur wie der Thermoplaste des erfindungsgemäßen Formteils haben. In einer bevorzugten Ausführungsform umfassen alle Thermoplaste die gleiche oder unterschiedliche Polycarbonatzusammensetzung(en).

Erfindungsgemäß wird ein Fließweg-zu-Wanddicken-Verhältnis von 180 bis 500, bevorzugt von 190 bis 450, besonders bevorzugt von 200 bis 420, ganz besonders bevorzugt von 210 bis 400, des Weiteren bevorzugt von 250 bis 390 bei einer Wanddicke des Formteils von maximal 3 mm, bevorzugt maximal 2,9 mm, weiter bevorzugt von maximal 2,2 mm, noch weiter bevorzugt von maximal 1,9 mm, besonders bevorzugt von maximal 1,6 mm, ganz besonders bevorzugt von maximal 1,5 mm erreicht. Hierbei liegt der Y.I., bestimmt gemäß ASTM E 313-15e1 (Beobachter: 10° / Lichtart: D65) an Musterplatten mit einer Wanddicke von 4 mm, besonders bevorzugt bei höchstens 1,70.

Das Formteil, bevorzugt die Leuchtenabdeckung, besonders bevorzugt die Scheinwerferabdeckung, umfasst die beschriebene, auf Polycarbonat basierende Zusammensetzung. Bevorzugt ist die Scheinwerferabdeckung aus der auf Polycarbonat basierenden Zusammensetzung hergestellt. Diese Polycarbonatzusammensetzung wird bevorzugt aufgeschmolzen und dann lässt man sie wieder erstarren, um das Formteil zu erhalten. In einer bevorzugten Ausführungsform wird das Formteil durch Spritzgießen erhalten.

Die Polycarbonatzusammensetzung umfasst mindestens ein Polycarbonat, welches ein gewichtsmittleres Molekulargewicht M_{w} von 22.000 g/mol bis 27.000 g/mol, bevorzugt von 22.000 g/mol bis 24.500 g/mol, bestimmt mittels Gelpermeationschromotographie nach DIN 55672-1:2007-08, kalibriert gegen Bisphenol A-Polycarbonat-Standards unter Verwendung von Dichlormethan als Elutionsmittel, aufweist.

Die Kalibrierung erfolgte mit linearen Polycarbonaten (aus Bisphenol A und Phosgen) bekannter Molmassenverteilung (469 g/mol bis ca. 100.000 g/mol) der PSS Polymer-Standards Service GmbH, Deutschland. Für die Kalibrierung wurde die Methode 2301-0257502-09D (aus dem Jahre 2009 in deutscher Sprache) der Currenta GmbH & Co. OHG, Leverkusen angewandt. Dichlormethan wurde als Elutionsmittel verwendet. Die Säulenkombination bei der Gelpermeationschromotographie bestand aus vernetzten Styrol-Divinylbenzolharzen. Die fünf analytischen Säulen hatten einen Durchmesser von 7,5 mm und eine Länge von 300 mm. Die Partikelgrößen des Säulenmaterials lag im Bereich von 3 µm bis 20 µm. Die Konzentration der untersuchten Lösungen betrug 0,2 Gew.-%. Die Flussrate wurde auf 1,0 ml/min eingestellt, die Temperatur der Lösungen betrug 30°C. Die Detektion erfolgte mit Hilfe eines Brechungsindex(RI)-Detektors.

Das angegebene gewichtsmittlere Molekulargewicht des Polycarbonats bezieht sich auf das Molgewicht des eingesetzten Polycarbonats vor dem Aufschmelzen. Erfindungsgemäß wurde festgestellt, dass sich das Molekulargewicht der Polycarbonatschmelze nicht wesentlich verändert. Es kann jedoch nicht ausgeschlossen werden, dass das Polycarbonat in der Schmelze zu einem geringen Anteil degradiert und dadurch die mittlere Molmasse leicht verkleinert wird. Es wurde jedoch gefunden, dass ein Abbau des Molekulargewichts im Wesentlichen verhindert werden kann, da die relative Lösungsviskosität ηᵣₑₗ (eta rel), gemessen gemäß ISO 1628-1:2009 mit einem Ubbelohde-Viskosimeter in einer Konzentration von 5 g/l in Dichlormethan nach einer Verweilzeit der Polycarbonatzusammensetzung von 10 min bei 370 °C, bevorzugt weniger als 1,3 %, besonders bevorzugt weniger als 1,0 %, ganz besonders bevorzugt weniger als 0,75 %, geringer ist als die relative Lösungsviskosität ηᵣₑₗ derselben Probe nach einer Verweilzeit der Polycarbonatzusammensetzung von 2 min bei 320 °C. Die Polycarbonatzusammensetzungen weisen somit selbst in der Schmelze bevorzugt ein im Wesentlichen unverändertes gewichtsmittleres Molekulargewicht auf.

Erfindungsgemäß kann die auf Polycarbonat basierende Zusammensetzung auch mehr als ein Polycarbonat enthalten. Dabei kann zum Beispiel eine Mischung aus mindestens zwei Polycarbonaten eingesetzt werden. In diesem Fall muss das Polycarbonatgemisch als homogenisierte Mischung das erfindungsgemäß definierte gewichtsmittlere Molekulargewicht ("mittlere gewichtsmittlere Molekulargewicht") aufweisen. Dabei wird die Homogenisierung bevorzugt durch Compoundierung erzielt.

Polycarbonate im Sinne der vorliegenden Erfindung sind sowohl Homopolycarbonate als auch Copolycarbonate; die Polycarbonate können in bekannter Weise linear oder verzweigt sein. Bevorzugt handelt es sich bei dem mindestens einen Polycarbonat der Polycarbonatzusammensetzung um ein aromatisches Polycarbonat.

Die Herstellung der Polycarbonate erfolgt in bekannter Weise aus Dihydroxyarylverbindungen, Kohlensäurederivaten, gegebenenfalls Kettenabbrechern und Verzweigern. Im Fall der Homopolycarbonate wird nur eine Dihydroxyarylverbindung eingesetzt, im Fall der Copolycarbonate werden mehrere Dihydroxyarylverbindungen eingesetzt.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Die Herstellung von Polycarbonaten, bevorzugt aromatischen Polycarbonaten, erfolgt z.B. durch Umsetzung von Dihydroxyarylverbindungen mit Kohlensäurehalogeniden, vorzugsweise Phosgen, und/oder mit Dicarbonsäuredihalogeniden, vorzugsweise aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Dihydroxyarylverbindungen mit beispielsweise Diphenylcarbonat möglich.

Für die Herstellung der Polycarbonate geeignete Dihydroxyarylverbindungen sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phthalimidine abgeleitet von Isatin- oder Phenolphthaleinderivaten sowie deren kernalkylierte, kernarylierte und kernhalogenierte Verbindungen.

Bevorzugte Dihydroxyarylverbindungen sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis(4-hydroxy-3-methylphenyl)propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 1,1-Bis-(4-hydroxyphenyl)-3,3,5-trimethylcyclohexan und 1,1-Bis-(4-hydroxyphenyl)-3,3,5-trimethylcyclohexan, sowie die Bisphenole (I) bis (III) 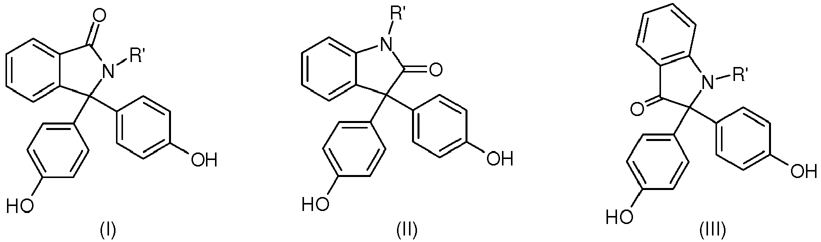 in denen R' jeweils für C₁- bis C₄-Alkyl, Aralkyl oder Aryl, bevorzugt für Methyl oder Phenyl, ganz besonders bevorzugt für Methyl, steht.

Besonders bevorzugte Dihydroxyarylverbindungen sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und 2,2-Bis(4-hydroxy-3-methylphenyl)propan sowie die Diphenole der Formeln (I), (II) und (III).

Diese und weitere geeignete Dihydroxyarylverbindungen sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Geeignete Kohlensäurederivate sind beispielsweise Phosgen oder Diphenylcarbonat.

Geeignete Kettenabbrecher, die bei der Herstellung der erfindungsgemäß verwendeten Polycarbonate eingesetzt werden können, sind Monophenole. Geeignete Monophenole sind beispielsweise Phenol selbst, Alkylphenole wie Kresole, p-tert.-Butylphenol, Cumylphenol, sowie deren Mischungen.

Bevorzugte Kettenabbrecher sind die Phenole, welche ein- oder mehrfach mit C₁- bis C₃₀-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, weiter bevorzugt 0,3 bis 4 Mol-%, noch weiter bevorzugt 0,5 bis 3 Mol-%, bezogen auf Mole an jeweils eingesetzten Dihydroxyarylverbindungen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Dihydroxyarylverbindungen.

Die Verzweiger können entweder mit den Dihydroxyarylverbindungen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Dihydroxyarylverbindungen eingesetzt.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Erfindungsgemäß weist die Polycarbonatzusammensetzung 0 bis weniger als 0,2 Gew.-% eines UV-Absorbers oder einer UV-Absorbermischung, bezogen auf das Gesamtgewicht der Polycarbonatzusammensetzung, auf. Es wurde überraschenderweise gefunden, dass dieser Gesamtgehalt an UV-Absorber zu Formteilen mit guten optischen Eigenschaften führt. Die bisherigen Polycarbonatzusammensetzungen des Stands der Technik, welche für Abdeckungen von Scheinwerfern verwendet werden, weisen einen Anteil an UV-Absorber oder UV-Absorbergemisch von mindestens 0,2 Gew.-% auf, um das Polycarbonat vor dem Lichtmittel des Scheinwerfers zu schützen. Das Formteil kann entweder mindestens eine UV-Schutzschicht aufweisen, welche ebenfalls das Formteil vor dem Lichtmittel des Scheinwerfers schützt, oder es wird als Lichtmittel eine LED oder ein Laserscheinwerfer verwendet, so dass der Schutz des Polycarbonats nicht notwendig ist.

Bevorzugt weist die Polycarbonatzusammensetzung nur 0 bis 0,19 Gew.-%, besonders bevorzugt 0 bis 0,15 Gew.-%, ganz besonders bevorzugt 0 bis 0,10 Gew.-%, insbesondere bevorzugt 0 bis 0,05 Gew.-% eines UV-Absorbers oder einer UV-Absorbermischung, bezogen auf das Gesamtgewicht der Polycarbonatzusammensetzung, auf. In einer besonders bevorzugten Ausführungsform weist die Polycarbonatzusammensetzung 0 Gew.-% eines UV-Absorbers oder einer UV-Absorbermischung, bezogen auf das Gesamtgewicht der Polycarbonatzusammensetzung, auf. Dabei ist 0 Gew.-% UV-Absorber bzw. die Formulierung "kein" UV-Absorber bevorzugt so zu verstehen, dass der Polycarbonatzusammensetzung bewusst kein UV-Absorber zugegeben wurde. Spuren eines UV-Absorbers können vorzugsweise aber bedingt durch den Herstellungsprozess bzw. die einzelnen zu verwendenden Komponenten immer noch vorhanden sein. Es konnte festgestellt werden, dass hierdurch besonders dünne Formteile bevorzugt mit einer Dicke von maximal 3 mm, insbesondere solche mit einer Dicke von höchstens 2,9 mm, bevorzugt weniger als 2,2 mm, weiter bevorzugt von weniger als 1,9 mm, noch weiter bevorzugt von weniger als 1,6 mm, ganz besonders bevorzugt von bis zu 1,5 mm, mit einem besonders hohen Fließweg-zu-Wanddicken-Verhältnis, wie vorstehend beschrieben, bei guter Steinschlagfestigkeit und hervorragenden optischen Eigenschaften, insbesondere einer hohen Transmission bei 400 nm, erhalten werden können. Ebenso weisen diese Formteile auch eine hohe Transmission über den sichtbaren Bereich, bevorzugt bestimmt nach ISO 13468-2:2006-07, auf.

In einer bevorzugten Ausführungsform weist die Polycarbonatzusammensetzung kein 2-(2'-Hydroxy-5'-(tert.-octyl)-phenyl)-benzotriazol, weiter bevorzugt keinen UV-Absorber auf.

Sofern geringe Mengen an UV-Absorber enthalten sind, sind dieses bevorzugt solche Verbindungen, die eine möglichst geringe Transmission unterhalb 400 nm und eine möglichst hohe Transmission oberhalb von 400 nm besitzen. Für den Einsatz in der erfindungsgemäßen Zusammensetzung besonders geeignete UV-Absorber sind Benzotriazole, Triazine, Benzophenone und/oder arylierte Cyanoacrylate.

Besonders geeignete UV-Absorber sind vorzugsweise Hydroxy-Benzotriazole, wie 2-(3',5'-Bis-(1,1-dimethylbenzyl)-2'-hydroxy-phenyl)-benzotriazol (Tinuvin® 234, BASF, Ludwigshafen), 2-(2'-Hydroxy-5'-(tert.-octyl)-phenyl)-benzotriazol (Tinuvin® 329, BASF, Ludwigshafen), Bis-(3-(2H-benztriazolyl)-2-hydroxy-5-tert.-octyl)methan (Tinuvin® 360, BASF, Ludwigshafen), 2-(4,6-Diphenyl-1,3,5-triazin-2-yl)-5-(hexyloxy)-phenol (Tinuvin® 1577, BASF, Ludwigshafen), sowie Benzophenone wie 2,4-Dihydroxybenzophenon (Chimasorb® 22 , BASF, Ludwigshafen) und 2-Hydroxy-4-(octyloxy)-benzophenon (Chimassorb® 81, BASF, Ludwigshafen), 2,2-Bis[[(2-cyano-1-oxo-3,3-diphenyl-2-propenyl)oxy]-methyl]-1,3-propandiylester (9CI) (Uvinul® 3030, BASF AG Ludwigshafen), 2-[2-Hydroxy-4-(2-ethylhexyl)oxy]phenyl-4,6-di(4-phenyl)phenyl-1,3,5-triazine (Tinuvin® 1600, BASF, Ludwigshafen), Tetraethyl-2,2'-(1,4-phenylen-dimethyliden)-bismalonat, (Hostavin® B-Cap, Clariant AG) oder N-(2-Ethoxyphenyl)-N'-(2-ethylphenyl)-ethandiamid (Tinuvin® 312, BASF, Ludwigshafen).

Besonders bevorzugte UV-Absorber sind Bis-(3-(2H-benztriazolyl)-2-hydroxy-5-tert.-octyl)methan (Tinuvin® 360), 2-(2'-Hydroxy-5'-(tert.-octyl)-phenyl)-benzotriazol (Tinuvin® 329) und N-(2-Ethoxyphenyl)-N'-(2-ethylphenyl)-ethandiamid (Tinuvin® 312), ganz besonders bevorzugt sind Bis-(3-(2H-benztriazolyl)-2-hydroxy-5-tert.-octyl)methan (Tinuvin® 360) und 2-(2'-Hydroxy-5'-(tert.-octyl)-phenyl)-benzotriazol (Tinuvin® 329).

Alle diese UV-Absorber können als Einzelkomponente oder in einem Gemisch von mindestens zwei UV-Absorbern eingesetzt werden.

Bevorzugt weist die Polycarbonatzusammensetzung mindestens einen Hilfsstoff auf, welcher ausgewählt wird aus der Gruppe, bestehend aus einem Entformungsmittel, Thermostabilisator, Antistatika, Pigmenten und/oder Aufheller. Dabei können auch beliebige Mischungen dieser Hilfsstoffe verwendet werden. Weiterhin können die Polycarbonate Umesterungsstabilisatoren wie z. B. Triisooctylphosphat (TOF) enthalten.

In einer bevorzugten Ausführungsform sind neben einem oder mehreren dieser Additive, Polycarbonat und den ggf. vorhandenen geringen Mengen UV-Absorber keine weiteren Komponenten in der Zusammensetzung enthalten.

Die gegebenenfalls zugesetzten Entformungsmitttel sind bevorzugt ausgewählt aus der Gruppe, bestehend aus Pentaerythrittetrastearat, Glycerinmonostearat und langkettigen Fettsäureestern, wie beispielsweise Stearylstearat und Propandiolstearat, welche gegebenenfalls nicht rein vorliegen, vorzugsweise auch mit anderen Fettsäuren wie Palmitinsäuren zumindest teilweise verestert sind, sowie deren Mischungen. Die Entformungsmittel werden vorzugsweise eingesetzt in Mengen von 0,05 Gew.-% bis 2,00 Gew.-%, bevorzugt in Mengen von 0,1 Gew.-% bis 1,0 Gew.-%, besonders bevorzugt in Mengen von 0,15 Gew.-% bis 0,60 Gew.-% und ganz besonders bevorzugt in Mengen von 0,20 Gew.-% bis 0,50 Gew.-%, bezogen auf das Gesamtgewicht der Polycarbonatzusammensetzung.

Als Thermostabilisatoren eignen sich bevorzugt Triphenylphosphin, Tris-(2,4-di-tert-butylphenyl)phosphit (Irgafos® 168), Tetrakis-(2,4-di-tert-butylphenyl)-[1,1-biphenyl]-4,4'-diylbisphosphonit, Triisooctylphosphat, Octadecyl-3-(3,5-di-tert-butyl-4-hydroxyphenyl)-propionat (Irganox® 1076), Bis-(2,4-dicumylphenyl)-pentaerythritoldiphosphit (Doverphos® S-9228), Bis-(2,6-di-tert-butyl-4-methylphenyl)-pentaerythritoldiphosphit (ADK STAB PEP-36). Sie werden allein oder im Gemisch (z. B. Irganox® B900 (Gemisch aus Irgafos® 168 und Irganox® 1076 im Verhältnis 1:3) oder Doverphos® S-9228 mit Irganox® B900 bzw. Irganox® 1076) eingesetzt. Die Thermostabilisatoren werden bevorzugt in Mengen von 0,003 bis 0,2 Gew.-%, bezogen auf das Gesamtgewicht der Polycarbonatzusammensetzung, eingesetzt.

Antistatika, Pigmente und Aufheller sowie die zu verwendenden Mengen sind dem Fachmann bekannt. Solche Verbindungen werden z. B. in "Plastics Additives", R. Gächter und H. Müller, Hanser Publishers 1983, beschrieben.

Zur Einarbeitung von Additiven wird das mindestens eine Polycarbonat bevorzugt in Form von Pulvern, Granulaten oder Gemischen aus Pulvern und Granulaten eingesetzt.

Die genannten Formteile, bevorzugt Leuchtenabdeckungen, insbesondere Scheinwerferabdeckungen, sind transparent. "Transparent" im erfindungsgemäßen Sinn bedeutet, dass die Zusammensetzungen eine visuelle Transmission Ty (D65 in 10° Beobachtung) von mindestens 84 %, bevorzugt mindestens 87 %, besonders bevorzugt mindestens 88 % und ganz besonders bevorzugt mindestens 89 %, bestimmt nach ISO13468-2:2006 bei einer Dicke von 4 mm, ohne weitere Lackierung, aufweisen. Besonders bevorzugt wird die Transmission gemäß der angegebenen ISO-Norm an einer Musterplatte mit 4 mm Wanddicke und planparallelen Flächen bestimmt. Bevorzugt bedeutet der Ausdruck "transparent" zusätzlich, dass die Zusammensetzungen eine Trübung von < 5 %, bestimmt nach ASTM D1003:2013 bei einer Schichtdicke von 4 mm, bevorzugt an einer Musterplatte mit 4 mm Wanddicke und planparallelen Flächen, aufweisen.

Bevorzugt weist das genannte Formteil eine Transmission bei 400 nm, gemessen gemäß ISO 13468-2 2006-07 an einer 4 mm dicken, ebenen Platte, von größer 65 %, besonders bevorzugt von größer 70 %, insbesondere bevorzugt größer 75 % und ganz besonders bevorzugt größer 80 % auf. Die Transmission wird hier nicht am Formteil selber, sondern an einer ebenen Platte gemessen, welche 4 mm dick ist. Die angegebenen Werte beziehen sich auf die Transmission des unbeschichteten Formteils bzw. einer entsprechenden 4 mm Platte vor einem eventuellem Lackier- oder anderweitigem Beschichtungsschritt.

Ebenso bevorzugt weist die Schmelze der Polycarbonatzusammensetzung bei der Herstellung des erfindungsgemäßen Formteils eine Temperatur von größer 300 bis 380 °C, besonders bevorzugt 305 bis 380 °C, weiterhin bevorzugt 310 bis 380 °C, insbesondere bevorzugt 320 bis 380 °C, ganz besonders bevorzugt 325 bis 370 °C und weiterhin besonders bevorzugt von 330 bis 360 °C, noch weiter bevorzugt von größer 330 bis 360°C, auf. Eine solche höhere Temperatur als die üblicherweise genutzten bis zu 300°C beim Spritzguss kann sich auch zusätzlich vorteilhaft auswirken hinsichtlich Vermeiden von Bindenähten, Fließmarkierungen, eingefrorenen Spannungen und anderen Spritzgussfehlern. Erfindungsgemäß wird die Temperatur der Polycarbonatschmelze bevorzugt so verstanden, dass sie der Temperatur entspricht, welche am Extruder eingestellt wird. Diese kann gegebenenfalls von der tatsächlichen Temperatur der Schmelze abweichen.

Bevorzugt wird das genannte Formteil, insbesondere eine Scheinwerferabdeckung, durch Spritzgießen erhalten. Dabei wird bevorzugt die Schmelze der Polycarbonatzusammensetzung auf die oben genannten Temperaturen erwärmt.

Bevorzugt wird ein Werkzeuginnendruck (Fülldruck) von maximal 1500 bar, besonders bevorzugt 1000 bar, insbesondere bevorzugt maximal 700 bar verwendet. Die bevorzugte Einspritzgeschwindigkeit hängt vom zu spritzenden Bauteil ab. Ihre Bestimmung liegt im Wissen und Können des Fachmanns. In einer bevorzugten Ausführungsform beträgt der spezifische Einspritzdruck maximal 2500 bar.

Besonders bevorzugt ist die Werkzeugtemperatur während der Herstellung des erfindungsgemäßen Formteils konstant.

In einem weiteren Aspekt der Erfindung weist das genannte Formteil bei einer Wanddicke von maximal 5 mm bevorzugt einen Fließweg von mindestens 200 mm, besonders bevorzugt mindestens 250 mm, ganz besonders bevorzugt mindestens 300 mm auf. Es können somit besonders große und gleichzeitig dünne Formteile hergestellt werden.

Besonders bevorzugt weist das Formteil eine Wanddicke von genau oder im Wesentlichen 1 bis 5 mm, insbesondere bevorzugt von genau oder im Wesentlichen 1 bis 3 mm, weiterhin bevorzugt von 1,10 bis 2,75 mm, weiterhin bevorzugt von genau oder im Wesentlichen 1,25 bis 2,50, ebenso bevorzugt von genau oder im Wesentlichen 1,5 bis 2,25 und ganz besonders bevorzugt von genau oder im Wesentlichen 1,5 bis 2,0 mm auf.

Erfindungsgemäß wird der Begriff "im Wesentlichen" insbesondere in Bezug auf die Wanddicke des erfindungsgemäßen Formteils verwendet. Darunter ist bevorzugt eine Abweichung vom angegebenen Wert, beispielsweise der Wanddicke, zu verstehen, welcher nicht größer als 25 %, besonders bevorzugt nicht größer als 10 %, ganz besonders bevorzugt nicht größer als 5 %, insbesondere bevorzugt nicht größer als 2,5 % und weiterhin bevorzugt nicht größer als 1 %, besonders bevorzugt 0 % ist. Dieser Wert bezieht sich besonders bevorzugt auf die bereits oben definierte dominierende Wanddicke. Wird auf die dominierende Wanddicke Bezug genommen, so ist die Abweichung vom angegebenen Wert ganz besonderes bevorzugt 0 %.

In einem Aspekt der vorliegenden Erfindung dient das genannte Formteil zur Abdeckung einer Lichtquelle. Dabei ist es weiterhin bevorzugt, dass die Lichtquelle eine LED oder ein Laserscheinwerfer ist.

Die genannten Scheinwerferabdeckungen werden für alle Lichtfunktionen an einem Kraftfahrzeug oder vor allem das Abblendlicht, Blinker oder Fernlicht verwendet. Es ist besonders bevorzugt, dass das Licht auf Basis lichtemittierender Dioden (LED) oder Laser erzeugt wird. Ebenso sind diese Scheinwerferabdeckungen in anderen Anwendungsgebieten außerhalb des Bereichs von Kraftfahrzeugen, beispielsweise Scheinwerferabdeckungen vom Leuchten allgemein, aber auch in Swimmingpools etc., verwendbar.

Bevorzugt umfasst das genannte Formteil mindestens eine zusätzliche Schicht, welche ausgewählt wird aus der Gruppe, bestehend aus einer Kratzfestbeschichtung ggf. mit UV-Schutz und/oder eine Antifog-Beschichtung. Dabei kann das erfindungsgemäße Formteil auch jeweils mehrere dieser Schichten aufweisen.

Kratzschutzschichten ggf. mit UV-Schutz sind dem Fachmann bekannt. Diese können durch bekannte Verfahren wie Fluten, Sprühen oder Tauchen auf das Formteil aufgebracht werden. Die Kratzfestlacke und deren Applikation sind beschrieben z.B. in DE10018935 A1, EP1164005A1, EP1089863 A1, EP0779327 A1, DE69317237 T2, EP1995056 A1, DE69105538 T2.

Antifog-Lacke auch speziell auf Polycarbonat-Substraten sind ebenfalls dem Fachmann bekannt und vielfach in der Literatur beschrieben, z.B. in der EP 1633805A1, US 6780516B2, US 5877254A, und der US 4604425A.

In einem weiteren Aspekt der vorliegenden Erfindung wird bei der erfindungsgemäßen Verwendung ein Spritzgussverfahren zur Herstellung eines transparenten Formteils, bevorzugt einer Leuchtenabdeckung, insbesondere einer Scheinwerferabdeckung eingesetzt, umfassend die Schritte:
(i) Bereitstellen einer auf aromatischem Polycarbonat basierenden Zusammensetzung, enthaltend
   a) aromatisches Polycarbonat, wobei das Polycarbonat ein mittleres gewichtsmittleres Molekulargewicht M_{w} von 22.000 g/mol bis 27.000 g/mol, bestimmt mittels Gelpermeationschromatographie nach DIN 55672-1:2007-08, kalibriert gegen Bisphenol A-Polycarbonat-Standards unter Verwendung von Dichlormethan als Elutionsmittel, aufweist und wobei das Polycarbonat 0 bis höchstens 19 mol% Carbonat-Einheiten der Formel (1) 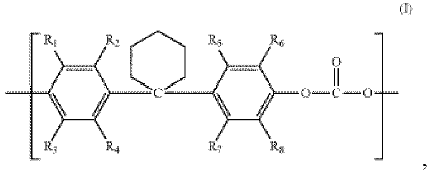 wobei R₁, R₂, R₃, R₄, R₅, R₆, R₇ und R₈ unabhängig voneinander H oder C₁- bis C₆-Alkyl bedeuten, aufweist, bevorzugt frei ist von Carbonat-Einheiten der Formel (1),
      und
   b) 0 bis weniger als 0,2 Gew.-% eines UV-Absorbers oder einer UV-Absorbermischung, bezogen auf das Gesamtgewicht der Polycarbonatzusammensetzung,
(ii) Formung eines Formteils, bevorzugt einer Leuchtenabdeckung, insbesondere einer Scheinwerferabdeckung, durch Spritzgießen der aufgeschmolzenen Polycarbonatzusammensetzung aus Schritt (i), wobei die Schmelze der Polycarbonatzusammensetzung eine Temperatur von größer 300 bis 380 °C, bevorzugt von 330 bis 360°C, aufweist.

Dabei wird mit dem vorgenannten Verfahren bevorzugt das beschriebene Formteil, insbesondere eine Scheinwerferabdeckung, in sämtlichen Ausgestaltungen und Bevorzugungen hergestellt. Alle zuvor beschriebenen bevorzugten Varianten gelten auch für die einzelnen Schritte (i) und (ii) des vorgenannten Verfahrens.

In einer bevorzugten Ausführungsform weist das genannte Verfahren zusätzlich den folgenden Schritt auf:
(iii) Aufbringen mindestens einer Schicht auf das Formteil des Schritts (ii), wobei die mindestens eine Schicht ausgewählt wird aus der Gruppe, bestehend aus einer Kratzfestbeschichtung ggf. mit UV-Schutz und einer Antifog-Beschichtung. Bei einer Scheinwerferabdeckung wird bevorzugt auf die Außenseite der Scheinwerferabdeckung eine Kratzfestbeschichtung mit UV-Schutzwirkung aufgebracht und auf die Innenseite der Scheinwerferabdeckung ein Antifog-Lack.

Es hat sich herausgestellt, dass durch den erfindungsgemäßen Grundgedanken dünne Formteile mit guten mechanischen und optischen Eigenschaften erhalten werden. Dabei können insbesondere dünne Formteile, bevorzugt Leuchtenabdeckungen, insbesondere Scheinwerferabdeckungen, hergestellt werden, da die Schmelze der Polycarbonatzusammensetzung in Schritt (ii) des erfindungsgemäßen Verfahrens eine Temperatur von größer 300 bis 380 °C, besonders bevorzugt 305 bis 380 °C, weiterhin bevorzugt 310 bis 380 °C, insbesondere bevorzugt 320 bis 380 °C, ganz besonders bevorzugt 325 bis 370 °C und weiterhin besonders bevorzugt von 330 bis 360 °C, äußerst bevorzugt größer 330 bis 360°C, aufweist.

### Beispiele

### Verwendete Materialien:

Material M1: Lineares Bisphenol-A-Polycarbonat, Entformer-haltig, mit einem MVR (300 °C/1,2 kg) von 19 cm³/10 min und einem Molekulargewicht M_{w} von ca. 24000 g/mol und Mₙ von ca. 10000 g/mol der Covestro Deutschland AG
Material M2: Lineares Bisphenol-A-Polycarbonat, Entformer-haltig, mit einem MVR (300 °C/1,2 kg) von 19 cm³/10 min und einem Molekulargewicht M_{w} von ca. 24000 g/mol und Mₙ von ca. 10000 g/mol der Covestro Deutschland AG
Vergleichsmaterial V1: Ein mit 0,2 Gew.-% 2-(2'-Hydroxy-5'-(tert.-octyl)-phenyl)-benzotriazol stabilisiertes lineares Bisphenol-A-Polycarbonat, Entformer-haltig, mit einem MVR (300 °C/1,2 kg) von 19 cm³/10 min und einem Molekulargewicht M_{w} von ca. 24000 g/mol und Mₙ von ca. 10000 g/mol der Covestro Deutschland AG
Die Bestimmung der Schmelze-Volumenfließrate (MVR) erfolgte nach ISO 1133-1:2011 (bei einer Prüftemperatur von 300 °C, Masse 1,2 kg) mit dem Gerät Zwick 4106 der Firma Zwick Roell. Dabei steht die Abkürzung MVR für die Anfangs-Schmelze-Volumenfließrate (nach 7 Minuten Vorwärmzeit), die Abkürzung IMVR20' für die Schmelze-Volumenfließrate nach 20 min und die Abkürzung IMVR30' für die Schmelze-Volumenfließrate nach 30 min.

Die Bestimmung der relativen Lösungsviskosität "ηᵣₑₗ (eta rel)" erfolgte durch Doppelbestimmung nach ISO1628-1:2009 mit einem Ubbelohde-Viskosimeter in einer Konzentration von 5 g/l in Dichlormethan. Im Folgenden werden immer die Mittelwerte der relativen Lösungsviskosität angegeben.

Die optischen Daten wurden gemessen gemäß der Standardmessnorm ISO 13468-2:2006-07. Insbesondere wurde die Transmission bei 400 nm gemäß ISO 13468-2:2006-07 an einer 4 mm dicken, ebenen Platte gemessen.

Der Yellowness Index (Y.I.) wurde gemäß ASTM E 313-15el (Beobachter: 10° / Lichtart: D65) an Musterplatten mit einer Wanddicke von 4 mm bestimmt.

Die Transmission im sichtbaren Bereich (Ty) wurde gemäß ISO 13468-2:2006-07 an Musterplatten mit einer Wanddicke von 4 mm bestimmt.

Der Farbort wurde gemäß ASTM E 308-15 an Musterplatten mit einer Wanddicke von 4 mm bestimmt.

Bei allen Musterplatten handelte es sich um ebene Platten.

Das Molekulargewicht M_{w} und Mₙ des verwendeten Polycarbonats wurde mittels Gelpermeationschromotographie unter Verwendung einer Polycarbonat-Kalibrierung (Methode der Currenta GmbH & Co. OHG, Leverkusen: PSS SECcurity System; Dichlormethan als Elutionsmittel, Säule 1 (PL-PC5) mit einer Konzentration von 2 g/l, Flussrate 1,0 ml/min bei einer Temperatur von 30 °C unter der Verwendung einer RI-Detektion), Methode wie in der allgemeinen Beschreibung beschrieben, bestimmt.

### Beispiel 1:

Es wurden Musterplatten 60 mm x 40 mm x 4 mm unter verschiedenen Bedingungen verspritzt und die optischen Eigenschaften sowie das Molekulargewicht anhand der relativen Lösungsviskosität bestimmt. Die Werkzeugtemperatur betrug jeweils 90°C. Die Veränderungen wurden jeweils relativ zu den entsprechenden Plättchen bei 320°C und normaler ("einfacher") Verweilzeit berechnet (mit "Ref" gekennzeichnet). Die Verweilzeit beträgt 2 min für reguläre ("einfacher") Verweilzeit und 10 min für die 5x Verweilzeit.

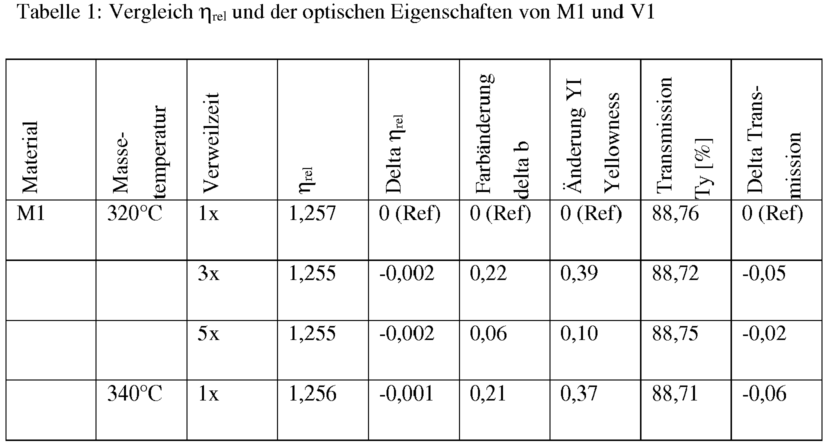

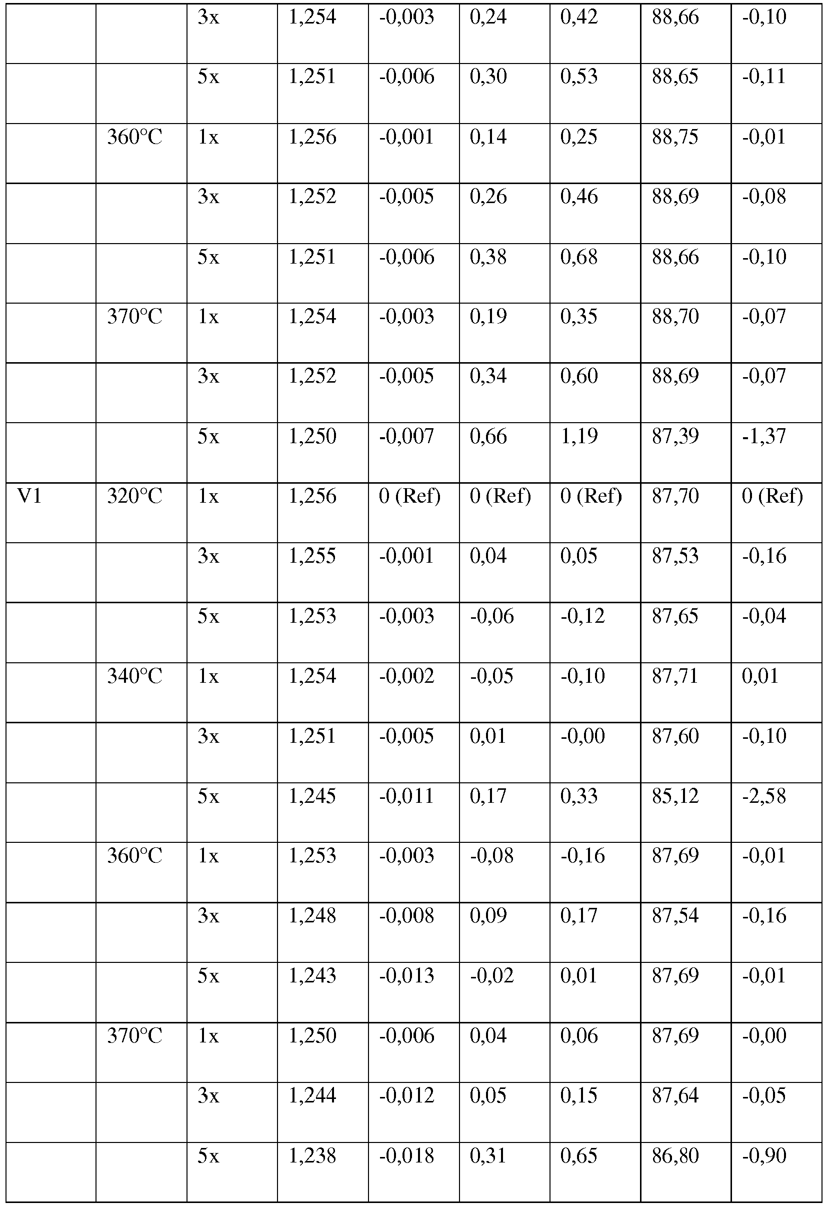

Das Polycarbonat-Material M1 zeigt weniger Abbau, zu erkennen an ηᵣₑₗ, besonders bei erhöhten Temperaturen und langer Verweilzeit verglichen mit V1.

### Beispiel 2: Messung des MVR auch bei verlängerter Standzeit (nach ISO 1133-1:2011)

**Tabelle 2: Vergleich des MVR nach verlängerter Standzeit für M1 und V1**

| | Prüfbedingungen | Material V1 MVR | Delta (5 min zu 20 min) | Material M1 MVR | Delta (5 min zu 20 min) |
|---|---|---|---|---|---|
| 5 Min. | 320°C / 1,2 kg | 32,5 cm³/(10 min) | | 33,1 cm³/(10 min) | |
| 20 Min. | 320°C / 1,2 kg | 34,7 cm³/(10 min) | 6,8% | 32,5 cm³/(10 min) | -1,8% |
| 5 Min. | 340°C / 2,16 kg | 54,5 cm³/(10 min) | | 52,5 cm³/(10 min) | |
| 20 Min. | 340°C / 2,16 kg | 63,1 cm³/(10 min) | 15,8% | 52,3 cm³/(10 min) | -0,4% |

Das Material M1 zeigt bei höheren Temperaturen weniger Veränderung des MVR gemessen nach 5 min im Vergleich zu der Messung nach 20 min. Dies bedeutet eine deutlich verbesserte Schmelzestabilität besonders bei erhöhten Temperaturen verglichen mit V1.

### Beispiel 3:

Die Fließfähigkeit der Materialien M1 und M2 wurde anhand eines Plattenwerkzeuges demonstriert. Die Platte hatte die Maße Länge 1000 mm, Breite 250 mm und Wanddicke 2 mm. An der Breitseite befand sich ein 125 mm breiter Filmanguss. Die Fließlänge wurde bestimmt vom Anschnitt bis zum Ende der Fließfront (am weitesten entfernter Punkt), ebenfalls an der Plattenbreitseite bestimmt.

Es wurde eine Spritzgussmaschine Engel Duo 1500 verwendet. Das Granulat wurde 4 Stunden bei 120°C getrocknet. Die Zuhaltekraft betrug 15000 kN, die Schnecke hatte D=90 mm und die Werkzeugtemperatur betrug 100°C. Bei einer Einspritzgeschwindigkeit von 60 mm/s wurde bis zum Erreichen der Spritzdruckgrenze von 2000 bar (spezifisch) am Fließwegende der Einspritzvorgang unterbrochen.

**Tabelle 3: Bestimmung des Fließweg-zu-Wanddicken-Verhältnisses für M1 und M2**

| Material | Schmelzetemperatur [°C] | Fließweg [mm] | Fließweg-zu-Wanddicken-Verhältnis |
|---|---|---|---|
| M1 | 340 | 637 | 318,5 |
| | 350 | 687 | 343,5 |
| | 360 | 748 | 374 |
| M2 | 340 | 570 | 285 |
| | 350 | 672 | 336 |
| | 360 | 711 | 355,5 |

Die Polycarbonate weisen hohe Fließweg-zu-Wanddicken-Verhältnisse auf. Alle erhaltenen Platten zeigen gute optische Eigenschaften.

Durch diesen Versuch kann belegt werden, dass in den erfindungsgemäßen Beispielen 1 und 2 Polycarbonatzusammensetzungen verwendet wurden, welche das erfindungsgemäß definierte Fließweg-zu-Wanddicken-Verhältnis bei einer Wanddicke bis zu 3 mm aufweisen. Damit wird deutlich, dass Bauteile, welche aus den Polycarbonatzusammensetzungen M1 und M2 hergestellt werden, erfindungsgemäß sind (auch wenn sie in den Beispielen 1 und 2 eine tatsächliche Wanddicke von 4 mm aufweisen).

### Beispiel 4:

### Komponenten:

PC-1: Lineares Polycarbonat auf Basis von Bisphenol A mit einer Schmelze-Volumenfließrate MVR von 19 cm³/10 min (gemäß ISO 1133-1:2011, bei einer Prüftemperatur 300°C und 1,2 kg Belastung),
PC-2: Pulver eines linearen Polycarbonates auf Basis von Bisphenol A mit einer Schmelze-Volumenfließrate MVR von 19 cm³/10 min (gemäß ISO 1133-1:2011, bei einer Prüftemperatur 300°C und 1,2 kg Belastung),
PC-3: Lineares Polycarbonat auf Basis von Bisphenol A mit einer Schmelze-Volumenfließrate MVR von 27 cm³/10 min (gemäß ISO 1133-1:2011, bei einer Prüftemperatur 300°C und 1,2 kg Belastung),
PC-4: Lineares Polycarbonat auf Basis von Bisphenol A mit einer Schmelze-Volumenfließrate MVR von 19 cm³/10 min (gemäß ISO 1133-1:2011, bei einer Prüftemperatur 300°C und 1,2 kg Belastung), einem Molekulargewicht M_{w} von ca. 23900 g/mol und Mₙ von ca. 9900 g/mol und tert-Butylphenol als Kettenabbrecher.
PC-5: Lineares Polycarbonat auf Basis von Bisphenol A mit einer Schmelze-Volumenfließrate MVR von 19 cm³/10 min (gemäß ISO 1133-1:2011, bei einer Prüftemperatur 300°C und 1,2 kg Belastung), einem Molekulargewicht M_{w} von ca. 23930 g/mol und Mₙ von ca. 10280 g/mol und tert-Butylphenol als Kettenabbrecher.
A1: Pentaerythrittetrastearat (Emery Oleochemicals, Loxstedt),
A2: 2-(2'-Hydroxy-5'-(tert.-octyl)-phenyl)-benzotriazol (Tinuvin® 329, BASF, Ludwigshafen),
A3: Triphenylphosphin (BASF, Ludwigshafen),
A4: Tris-(2,4-di-tert-butylphenyl)phosphit (Irgafos® 168) (BASF, Ludwigshafen),
A5: Irganox® B900 (Gemisch aus Irgafos® 168 und Irganox® 1076 im Verhältnis 80:20) (Irganox® 1076 = Octadecyl-3-(3,5-di-tert-butyl-4-hydroxyphenyl)-propionat) (BASF, Ludwigshafen)
A6: 2-2'-Methylenebis[6-(2H-benzotriazol-2-yl)-4-(1,1,3,3-tetramethylbutyl)phenol] (Tinuvin 360, BASF, Ludwigshafen)
A7: 2-(2H-Benzotriazol-2-yl)-4,6-bis(1-methyl-1-phenylethyl) (Tinuvin 234, BASF, Ludwigshafen)
A8: Triisooctylphenol (TOF, Lanxess AG; Deutschland)

Die erfindungsgemäßen Compounds zu den folgenden Beispielen wurden auf einem Extruder ZE 25 der Fa. Berstorff mit einem Durchsatz von 5 kg/Std. und einer Drehzahl von 50/min und einer Temperatur von 275 °C hergestellt.

Die Massen M3 bis M10 können zu Formteilen geformt werden, welche ein Fließweg-zu-Wanddicken-Verhältnis bei einer theoretischen maximalen Wanddicke von im Wesentlichen 3 mm von größer 180 aufweisen. Damit können mit den Massen M3 bis M10 erfindungsgemäße Formteile hergestellt werden. Im Folgenden werden jedoch 4 mm dicke Platten untersucht, da dies die Standard-Wanddicke zur Vermessung optischer Eigenschaften darstellt.

Die Abkürzung VWZ steht für Verweilzeit. Die Verweilzeit beträgt 2 min für reguläre ("einfache") Verweilzeit und 10 min für die 5x Verweilzeit.

**Tabelle 4: Ergebnisse der Vermessung der Compounds M3 und M4, sowie V2 bis V5**

| Zusammensetzung / Probe | | M3 | M4 | V2 | V3 | V4 | V5 |
|---|---|---|---|---|---|---|---|
| PC-1 | Gew.-% | 95 | 95 | 95 | 95 | 95 | 95 |
| PC-2 | Gew.-% | 4,78 | 4,58 | 4,58 | 4,38 | 4,48 | 4,28 |
| A1 | Gew.-% | 0,2 | 0,4 | 0,2 | 0,4 | 0,2 | 0,4 |
| A2 | Gew.-% | - | - | 0,2 | 0,2 | 0,3 | 0,3 |
| A3 | Gew.-% | 0,02 | 0,02 | 0,02 | 0,02 | 0,02 | 0,02 |
| Gemessene Eigenschaften | | | | | | | |
| Molekulargewicht Mₙ | g/mol | 9591 | 9812 | 9663 | 9710 | 9218 | 9748 |
| Molekulargewicht M_{w} | g/mol | 23096 | 23276 | 23292 | 23375 | 23268 | 23467 |
| ηᵣₑₗ | | 1,251 | 1,250 | 1,251 | 1,250 | 1,251 | 1,250 |
| MVR 300°C/1,2 kg | ml/(10min) | 19,7 | 20,2 | 20,8 | 21,3 | 21,1 | 21,8 |
| IMVR20' 300°C/1,2 kg | ml/(10min) | 20,7 | 21,3 | 21,8 | 22,7 | 22,2 | 23,1 |
| IMVR30' 300°C/1,2 kg | ml/(10min) | 20,9 | 21,8 | 22,0 | 23,7 | 22,5 | 23,3 |
| Delta MVR/IMVR20' 300°C/1,2 kg | | 1,0 | 1,1 | 1,0 | 1,4 | 1,1 | 1,3 |
| Delta MVR/IMVR30' 300°C/1,2 kg | | 1,2 | 1,6 | 1,2 | 2,4 | 1,4 | 1,5 |
| MVR 320°C/1,2 kg | ml/(10min) | 35,5 | 36,6 | 36,2 | 37,5 | 37,8 | 37,7 |
| IMVR20' 320°C/1,2 kg | ml/(10min) | 35,5 | 36,8 | 37,6 | 39,9 | 39,6 | 41,6 |
| IMVR30' 320°C/1,2 kg | ml/(10min) | 35,2 | 37,1 | 40,7 | 42,9 | 43,2 | 45,5 |
| Delta MVR/IMVR20' 320°C/1,2 kg | | 0,0 | 0,2 | 1,4 | 2,4 | 1,8 | 3,9 |
| Delta MVR/IMVR30' 320°C/1,2 kg | | -0,3 | 0,5 | 4,5 | 5,4 | 5,4 | 7,8 |

| Optik 4 mm Plättchen | | | | | | | |
|---|---|---|---|---|---|---|---|
| 300°C | | | | | | | |
| Transmission bei 380 nm | % | 83,82 | 84,35 | 2,81 | 2,75 | 2,49 | 2,55 |
| Transmission bei 400 nm | % | 86,83 | 87,35 | 58,25 | 56,65 | 48,72 | 48,00 |
| Y.I. | | 1,39 | 1,22 | 1,73 | 1,71 | 1,88 | 2,03 |
| 300°C 5x VWZ | | | | | | | |
| Transmission bei 380 nm | % | 83,15 | 83,74 | 2,89 | 2,69 | 2,55 | 2,53 |
| Transmission bei 400 nm | % | 86,55 | 87,10 | 58,23 | 56,66 | 48,37 | 47,98 |
| Y.I. | | 1,47 | 1,32 | 1,81 | 1,82 | 1,99 | 2,09 |

| 320°C | | | | | | | |
|---|---|---|---|---|---|---|---|
| Transmission bei 380 nm | % | 83,05 | 83,38 | 2,92 | 2,76 | 2,47 | 2,50 |
| Transmission bei 400 nm | % | 86,63 | 86,99 | 58,03 | 56,45 | 48,37 | 47,93 |
| Y.I. | | 1,51 | 1,37 | 1,88 | 1,84 | 2,00 | 2,15 |

| 320°C 5x VWZ | | | | | | | |
|---|---|---|---|---|---|---|---|
| Transmission bei 380 nm | % | 82,70 | 82,85 | 3,01 | 2,76 | 2,43 | 2,63 |
| Transmission bei 400 nm | % | 86,20 | 86,62 | 57,88 | 56,47 | 48,56 | 47,82 |
| Y.I. | | 1,52 | 1,46 | 1,95 | 1,90 | 2,12 | 2,22 |

**Tabelle 5: Ergebnisse der Vermessung der Compounds M5 und M6, sowie V6 bis V13**

| Zusammensetzung / Probe | | **M5** | **M6** | **V6** | **V7** | **V8** | **V9** | **M7** | **M8** | **V10** | **V11** | **V12** | **V13** |
|---|---|---|---|---|---|---|---|---|---|---|---|---|---|
| PC-1 | Gew.-% | 95 | 95 | 95 | 95 | 95 | 95 | 95 | 95 | 95 | 95 | 95 | 95 |
| PC-2 | Gew.-% | 4,77 | 4,57 | 4,57 | 4,37 | 4,47 | 4,27 | 4,77 | 4,57 | 4,57 | 4,37 | 4,47 | 4,27 |
| A1 | Gew.-% | 0,2 | 0,4 | 0,2 | 0,4 | 0,2 | 0,4 | 0,2 | 0,4 | 0,2 | 0,4 | 0,2 | 0,4 |
| A2 | Gew.-% | - | - | 0,2 | 0,2 | 0,3 | 0,3 | - | - | 0,2 | 0,2 | 0,3 | 0,3 |
| A4 | Gew.-% | 0,03 | 0,03 | 0,03 | 0,03 | 0,03 | 0,03 | - | - | - | - | - | - |
| A5 | Gew.-% | - | - | - | - | - | - | 0,03 | 0,03 | 0,03 | 0,03 | 0,03 | 0,03 |
| Molekulargewicht Mₙ | g/mol | 9432 | 9247 | 9499 | 9167 | 9484 | 9462 | 9381 | 9570 | 9715 | 9614 | 9710 | 9639 |
| Molekulargewicht M_{w} | g/mol | 23340 | 23239 | 23365 | 23297 | 23334 | 23390 | 23443 | 23429 | 23519 | 23508 | 23740 | 23476 |
| ηᵣₑₗ Granulat | | 1,256 | 1,254 | 1,251 | 1,253 | 1,255 | 1,253 | 1,256 | 1,255 | 1,253 | 1,254 | 1,254 | 1,253 |
| MVR 300°C/1,2 kg | ml/(10 min) | 19,0 | 19,0 | 18,8 | 19,7 | 18,5 | 19,6 | 18,7 | 18,1 | 19,4 | 18,9 | 19,3 | 20,0 |
| IMVR20' 300°C/1,2 kg | ml/(10 min) | 18,7 | 19,1 | 18,5 | 19,7 | 19,1 | 20,3 | 16,1 | 18,0 | 20,1 | 19,1 | 19,7 | 20,7 |
| IMVR30' 300°C/1,2 kg | ml/(10 min) | 19,0 | 19,5 | 19,5 | 20,4 | 19,9 | 20,4 | 18,9 | 18,3 | 20,4 | 19,4 | 19,4 | 19,8 |
| Delta MVR/IMVR20' 300°C/1,2 kg | | **-0,3** | **0,1** | **-0,3** | **0,0** | **0,6** | **0,7** | **-2,6** | **-0,1** | **0,7** | **0,2** | **0,4** | **0,7** |
| Delta MVR/IMVR30' 300°C/1,2 kg | | **0,0** | **0,5** | **0,7** | **0,7** | **1,4** | **0,8** | **0,2** | **0,2** | **1,0** | **0,5** | **0,1** | **-0,2** |
| MVR 320°C/1,2 kg | ml/(10 min) | 32,8 | 33,9 | 33,5 | 34,1 | 33,1 | 34,2 | 32,1 | 31,0 | 33,2 | 32,7 | 33,3 | 35,1 |
| IMVR20' 320°C/1,2 kg | ml/(10 min) | 34,1 | 33,6 | 34,0 | 36,4 | 34,7 | 35,3 | 32,8 | 31,7 | 36,2 | 34,6 | 35,2 | 36,5 |
| IMVR30' 320°C/1,2 kg | ml/(10 min) | 34,3 | 34,4 | 35,4 | 36,5 | 36,4 | 36,1 | 33,9 | 31,6 | 35,2 | 34,4 | 37,1 | 37,1 |
| Delta MVR/IMVR20' 320°C/1,2 kg | | **1,3** | **-0,3** | **0,5** | **2,3** | **1,6** | **1,1** | **0,7** | **0,7** | **3,0** | **1,9** | **1,9** | **1,4** |
| Delta MVR/IMVR30' 320°C/1,2 kg | | **1,5** | **0,5** | **1,9** | **2,4** | **3,3** | **1,9** | **1,8** | **0,6** | **2,0** | **1,7** | **3,8** | **2,0** |
| Optische Daten Verarbeitungsstabilität 4 mm | | | | | | | | | | | | | |

| **300°C** | | | | | | | | | | | | | |
|---|---|---|---|---|---|---|---|---|---|---|---|---|---|
| Transmission Ty | % | 89,55 | 89,6 | 89,6 | 89,58 | 89,55 | 89,55 | 89,56 | 89,58 | 89,6 | 89,63 | 89,66 | 89,58 |
| Yellowness Index | | 2,16 | 1,98 | 2,38 | 2,39 | 3,04 | 2,12 | 2,9 | 2,07 | 2,22 | 2,33 | 2,36 | 2,48 |
| Haze | % | 0,27 | 0,25 | 0,25 | 0,37 | 0,26 | 0,22 | 0,33 | 0,25 | 0,28 | 0,23 | 0,25 | 0,23 |

| **300°C 5xVWZ** | | | | | | | | | | | | | |
|---|---|---|---|---|---|---|---|---|---|---|---|---|---|
| Transmission Ty | % | 89,45 | 89,56 | 89,56 | 89,55 | 89,62 | 89,68 | 89,49 | 89,52 | 89,58 | 89,63 | 89,63 | 89,65 |
| Yellowness Index | | 2,36 | 1,78 | 2,51 | 2,59 | 2,56 | 1,67 | 3,17 | 2,09 | 2,37 | 2,16 | 2,35 | 2,23 |
| Haze | % | 0,26 | 0,37 | 0,26 | 0,27 | 0,24 | 0,23 | 0,3 | 0,28 | 0,33 | 0,3 | 0,26 | 0,28 |

| **320°C** | | | | | | | | | | | | | |
|---|---|---|---|---|---|---|---|---|---|---|---|---|---|
| Transmission Ty | % | 89,33 | 89,48 | 89,46 | 89,45 | 89,46 | 89,42 | 89,37 | 88,98 | 89,54 | 89,5 | 89,5 | 89,56 |
| Yellowness Index | | 2,81 | 2,4 | 2,89 | 2,83 | 3,23 | 2,55 | 3,26 | 2,54 | 2,5 | 2,6 | 2,94 | 2,62 |
| Haze | % | 0,24 | 0,32 | 0,23 | 0,28 | 0,45 | 0,27 | 0,34 | 0,45 | 0,29 | 0,34 | 0,52 | 0,31 |

| **320°C 5xVWZ** | | | | | | | | | | | | | |
|---|---|---|---|---|---|---|---|---|---|---|---|---|---|
| Transmission Ty | % | 87,00 | 89,53 | 87,77 | 86,43 | 89,17 | 89,36 | 89,32 | 89,32 | 89,52 | 89,54 | 86,99 | 89,58 |
| Yellowness Index | | 2,8 | 2,01 | 2,87 | 2,84 | 3,43 | 2,54 | 3,12 | 2,52 | 2,37 | 2,32 | 2,7 | 2,36 |
| Haze | % | 6,83 | 0,26 | 6,61 | 7,34 | 0,78 | 1,41 | 1,71 | 0,67 | 2,44 | 0,65 | 2,73 | 0,36 |

**Tabelle 6: Ergebnisse der Vermessung der Compounds M9 und M10, sowie V14 bis V17**

| **Rezeptur** | | **M9** | **M10** | **V14** | **V15** | **V16** | **V17** |
|---|---|---|---|---|---|---|---|
| PC-3 | Gew.-% | 95 | 95 | 95 | 95 | 95 | 95 |
| PC-2 | Gew.-% | 4,78 | 4,58 | 4,58 | 4,38 | 4,48 | 4,28 |
| A1 | Gew.-% | 0,2 | 0,4 | 0,2 | 0,4 | 0,2 | 0,4 |
| A2 | Gew.-% | - | - | 0,2 | 0,2 | 0,3 | 0,3 |
| A3 | Gew.-% | 0,02 | 0,02 | 0,02 | 0,02 | 0,02 | 0,02 |

| **Prüfungen:** | | | | | | | |
|---|---|---|---|---|---|---|---|
| etaᵣₑₗ | | 1,241 | 1,239 | 1,240 | 1,238 | 1,239 | 1,239 |
| Mₙ | g/mol | 9488 | 9527 | 9686 | 9594 | 9794 | 9585 |
| M_{w} | g/mol | 22336 | 22093 | 22368 | 21800 | 22607 | 22406 |
| MVR 300°C/1,2 kg | ml/(10 min) | 25,7 | 26,7 | 26,7 | 27,9 | 27,4 | 28,4 |
| IMVR20' 300°C/1,2 kg | ml/(10 min) | 25,8 | 27,5 | 27,5 | 29,0 | 28,9 | 31,1 |
| IMVR30' 300°C/1,2 kg | ml/(10 min) | 26,0 | 27,8 | 28,6 | 30,5 | 31,8 | 33,0 |
| **Delta MVR/IMVR20'** | | **0,1** | **0,8** | **0,8** | **1,1** | **1,5** | **2,7** |
| **Delta MVR/IMVR30'** | | **0,3** | **1,1** | **1,9** | **2,6** | **4,4** | **4,6** |
| MVR 320°C/1,2 kg | ml/(10 min) | 47,8 | 49,1 | 49,2 | 50,8 | 49,3 | 52,0 |
| IMVR20' 320°C/1,2 kg | ml/(10 min) | 46,0 | 49,4 | 54,2 | 57,6 | 55,7 | 62,1 |
| IMVR30' 320°C/1,2 kg | ml/(10 min) | 46,6 | 49,5 | 55,5 | 59,8 | 59,4 | 62,5 |
| **Delta MVR/IMVR20'** | | **-1,8** | **0,3** | **5,0** | **6,8** | **6,4** | **10,1** |
| **Delta MVR/IMVR30'** | | **-1,2** | **0,4** | **6,3** | **9,0** | **10,1** | **10,5** |

| **Optik 4 mm** | | | | | | | |
|---|---|---|---|---|---|---|---|
| **300°C** | | | | | | | |
| Transmission Ty | % | 89,69 | 89,70 | 89,72 | 89,69 | 89,70 | 89,76 |
| Trübung | % | 0,25 | 0,21 | 0,18 | 0,16 | 0,15 | 0,16 |
| Y.I. | | 1,62 | 1,68 | 2,04 | 2,08 | 2,25 | 2,23 |

| **300°C 5x VWZ** | | | | | | | |
|---|---|---|---|---|---|---|---|
| Transmission Ty | % | 89,70 | 89,71 | 89,70 | 89,70 | 89,70 | 89,77 |
| Trübung | % | 0,24 | 0,20 | 0,19 | 0,19 | 0,18 | 0,19 |
| Y.I. | | 1,59 | 1,64 | 2,11 | 2,15 | 2,33 | 2,32 |

| **320°C** | | | | | | | |
|---|---|---|---|---|---|---|---|
| Transmission Ty | % | 89,63 | 89,73 | 89,67 | 89,71 | 89,58 | 89,73 |
| Trübung | % | 0,30 | 0,17 | 0,21 | 0,17 | 0,17 | 0,20 |
| Y.I. | | 1,63 | 1,60 | 2,22 | 2,22 | 2,48 | 2,34 |

| **320°C 5x VWZ** | | | | | | | |
|---|---|---|---|---|---|---|---|
| Transmission Ty | % | 89,67 | 89,74 | 89,66 | 89,43 | 89,69 | 89,73 |
| Trübung | % | 0,35 | 0,21 | 0,00 | 0,82 | 0,26 | 0,25 |
| Y.I. | | 1,62 | 1,58 | 2,20 | 2,29 | 2,47 | 2,42 |

**Tabelle 7: Ergebnisse der Vermessung der Compounds M11 und M12**

| **Rezeptur** | | **M11** | **M12** |
|---|---|---|---|
| PC-4 | Gew.-% | 99,73 | |
| PC-5 | Gew.-% | | 99,68 |
| A1 | Gew.-% | 0,14 | 0,19 |
| A5 | Gew.-% | 0,026 | 0,032 |
| A6 | Gew.-% | 0,09 | |
| A7 | Gew.-% | | 0,09 |
| A8 | Gew.-% | 0,01 | 0,01 |

| **Prüfungen:** | | | |
|---|---|---|---|
| **Optik 4 mm** | | | |
| **280°C/ 1x VWZ** | | | |
| Transmission Ty | % | 88,61 | 88,20 |
| Y.I. | | 0,68 | 1,03 |
| Trübung | % | 0,22 | 0,38 |

| **320°C/ 1x VWZ** | | | |
|---|---|---|---|
| Transmission Ty | % | 88,60 | 88,33 |
| Y.I. | | 0,78 | 0,82 |
| Trübung | % | 0,22 | 0,18 |

| **320°C/ 3x VWZ** | | | |
|---|---|---|---|
| Transmission Ty | % | 88,54 | 88,19 |
| Y.I. | | 1,00 | 1,11 |
| Trübung | % | 0,43 | 0,23 |

| **320°C/ 5x VWZ** | | | |
|---|---|---|---|
| Transmission Ty | % | 88,15 | 88,12 |
| Y.I. | | 1,19 | 1,33 |
| Trübung | % | 2,08 | 0,29 |

| **350°C/ 1x VWZ** | | | |
|---|---|---|---|
| Transmission Ty | % | 87,83 | 87,08 |
| Y.I. | | 0,85 | 2,69 |
| Trübung | % | 1,06 | 0,48 |

| **350°C/ 3x VWZ** | | | |
|---|---|---|---|
| Transmission Ty | % | - | 88,30 |
| Y.I. | | - | 0,81 |
| Trübung | % | - | 0,49 |

| **350°C/ 5x VWZ** | | | |
|---|---|---|---|
| Transmission Ty | % | - | 88,30 |
| Y.I. | | - | 1,07 |
| Trübung | % | - | 0,50 |

| | | | |
|---|---|---|---|
| VWZ: Verweilzeit in der Spritzgussmaschine | | | |

Die Polycarbonate der Beispiele M3-M10 zeigen bei erhöhten Temperaturen und verlängerter Standzeit eine verbesserte Schmelzestabilität im Vergleich zu den Vergleichsbeispielen V2-V17. Die optischen Eigenschaften sind bei allen erfindungsgemäßen Materialien konstant auf sehr gutem Niveau.

### Beispiel 5: Simulation der Fließfähigkeit unter Standardbedingungen

Es wurde ein quaderförmiger Streifen simuliert mit einer Stirnfläche von 25 mm mal einer variablen Wanddicke von 1,5 bis 4 mm. An einer der beiden Stirnseiten wurde auch ein Film-Anguss angenommen. Die Länge des Streifens betrug 1156 mm. Die Werkzeugtemperatur wurde mit 100°C angenommen, der Fülldruck mit 1000 bar und die Massetemperatur mit 300°C. Höhere Temperaturen führen bei dem Material V1 zu einer erheblichen Verschlechterung der optischen Eigenschaften des erhaltenen Formteils und sind daher nicht nutzbar. In der Simulation mit der kommerziell erhältlichen Software Autodesk® Moldflow® Version AMI2016 SP3 wurde dieses Werkzeug gefüllt mit V1. Die Fließwege sind in Tabelle 7 zusammengefasst.

**Tabelle 8: Simulierte Fließfähigkeit des Vergleichsmaterials V1**

| | | | | | | |
|---|---|---|---|---|---|---|
| Wanddicke in mm | 1,5 | 1,8 | 2,0 | 2,2 | 3 | 4 |
| Fließweg in mm nach Simulation | 150 | 202 | 242 | 285 | 478 | 755 |
| Verhältnis Fließ weg zu Wanddicke | 100 | 112 | 121 | 130 | 159 | 189 |

Wie den Ergebnissen der Tabelle 7 zu entnehmen ist, ist bei der Vergleichszusammensetzung V1 das Fließweg-zu-Wanddicken-Verhältnis bei einer Wanddicke von 3 mm auf einen Wert unterhalb des erfindungsgemäßen Bereichs begrenzt. Dementsprechend sind die Fließweg-zu-Wanddicken-Verhältnisse für dünnere Formteile noch weiter unterhalb des erfindungsgemäßen Bereichs.

## Patentansprüche

1. Verwendung einer auf Polycarbonat basierenden Zusammensetzung A,
enthaltend
a) aromatisches Polycarbonat, wobei das Polycarbonat ein mittleres gewichtsmittleres Molekulargewicht M_{w} von 22.000 g/mol bis 27.000 g/mol, bestimmt mittels Gelpermeationschromotographie nach DIN 55672-1:2007-08, kalibriert gegen Bisphenol A-Polycarbonat-Standards unter Verwendung von Dichlormethan als Elutionsmittel, aufweist und wobei das Polycarbonat 0 bis höchstens 19 mol% Carbonat-Einheiten der Formel (1) 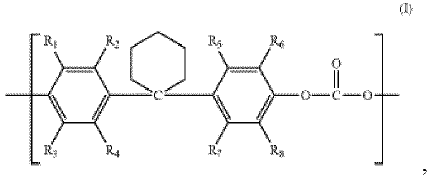 wobei R₁, R₂, R₃, R₄, R₅, R₆, R₇ und R₈ unabhängig voneinander H oder C₁- bis C₆-Alkyl bedeuten, aufweist,
und
b) 0 bis weniger als 0,2 Gew.-% eines UV-Absorbers oder einer UV-Absorbermischung, bezogen auf das Gesamtgewicht der Polycarbonatzusammensetzung,
zur Erhöhung des Fließweg-zu-Wanddickenverhältnisses bei der Herstellung transparenter Formteile mittels Spritzguss.

2. Verwendung gemäß Anspruch 1 , wobei das Fließweg-zu-Wanddicken-Verhältnis bei dem Formteil 180 bis 500 beträgt, insbesondere 250 bis 500, bevorzugt 190 bis 450.

3. Verwendung gemäß Anspruch 1 oder 2, wobei das Formteil eine Transmission bei 400 nm, gemessen gemäß ISO 13468-2:2006-07 an einer 4 mm dicken, ebenen Platte, von größer 65 % aufweist.

4. Verwendung gemäß einem der vorhergehenden Ansprüche, wobei die Zusammensetzung neben den Komponenten a) und b) sowie optional
c) weiteren üblichen Additiven ausgewählt aus der Gruppe, bestehend aus Entformungsmitteln, Thermostabilisatoren, Antistatika, Pigmenten und/oder Aufhellern,
keine weiteren Komponenten enthält.

5. Verwendung nach einem der vorstehenden Ansprüche, wobei die maximale Wanddicke des Formteils 1,9 mm beträgt.

6. Verwendung nach einem der vorstehenden Ansprüche, wobei das Polycarbonat mindestens 98 mol% auf Bisphenol-A-basierende Carbonat-Einheiten aufweist, bezogen auf die Gesamtmenge an Carbonat-Einheiten.

7. Verwendung nach einem der vorstehenden Ansprüche, wobei das Formteil eine Scheinwerferabdeckung ist.

8. Verwendung nach einem der Anspruch 7, wobei die Scheinwerferabdeckung Teil eines Scheinwerfers ist, der neben der Scheinwerferabdeckung eine Lichtquelle umfasst, welche eine LED-Lichtquelle ist.

9. Verwendung nach einem der vorstehenden Ansprüche, wobei das Spritzgussverfahren die folgenden Schritte umfasst:
(i) Bereitstellen einer auf aromatischem Polycarbonat basierenden Zusammensetzung, enthaltend
a) aromatisches Polycarbonat, wobei das Polycarbonat ein gewichtsmittleres Molekulargewicht M_{w} von 22.000 g/mol bis 27.000 g/mol, bestimmt mittels Gelpermeationschromotographie nach DIN 55672-1:2007-08, kalibriert gegen Bisphenol A-Polycarbonat-Standards unter Verwendung von Dichlormethan als Elutionsmittel, aufweist und wobei das Polycarbonat 0 bis höchstens 19 mol% Carbonat-Einheiten der Formel (1) 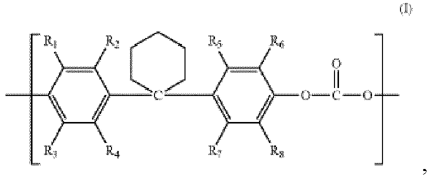 wobei R₁, R₂, R₃, R₄, R₅, R₆, R₇ und R₈ unabhängig voneinander H oder C₁- bis C₆-Alkyl bedeuten, aufweist,
und
b) 0 bis weniger als 0,2 Gew.-% eines UV-Absorbers oder einer UV-Absorbermischung, bezogen auf das Gesamtgewicht der auf aromatischem Polycarbonat basierenden Zusammensetzung,
(ii) Formung eines Formteils durch Spritzgießen der aufgeschmolzenen auf aromatischem Polycarbonat basierenden Zusammensetzung aus Schritt (i), wobei die Schmelze der auf aromatischem Polycarbonat basierenden Zusammensetzung eine Temperatur von größer 300 bis 380 °C aufweist.

10. Verwendung nach Anspruch 9, wobei die Schmelze der auf aromatischem Polycarbonat basierenden Zusammensetzung eine Temperatur von größer 330°C, bis 360°C aufweist.

11. Verwendung nach Anspruch 9 oder 10, wobei der spezifische Einspritzdruck maximal 2500 bar beträgt.

## Claims

1. Use of a polycarbonate-based composition A, comprising
a) aromatic polycarbonate, where the polycarbonate has a mean weight-average molecular weight M_{w} of 22 000 g/mol to 27 000 g/mol, determined by means of gel permeation chromatography to DIN 55672-1:2007-08, calibrated against bisphenol A polycarbonate standards using dichloromethane as eluent, and where the polycarbonate includes 0 to not more than 19 mol% of carbonate units of the formula (1) 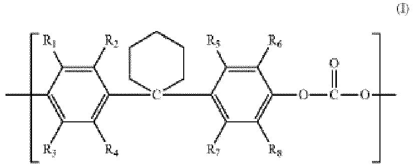 where R₁, R₂, R₃, R₄, R₅, R₆, R₇ and R₈ are independently H or C₁- to C₆-alkyl,
and
b) 0% to less than 0.2% by weight of a UV absorber or a UV absorber mixture, based on the total weight of the polycarbonate composition,
for increasing the flow distance to wall thickness ratio in the production of transparent molded articles by means of injection molding.

2. Use according to Claim 1, wherein the flow distance to wall thickness ratio in the molded article is 180 to 500, in particular 250 to 500, preferably 190 to 450.

3. Use according to Claim 1 or 2, wherein the molded article has a transmittance at 400 nm, measured to ISO 13468-2:2006-07 on a 4 mm-thick flat sheet, of greater than 65%.

4. Use according to any of the preceding claims, wherein the composition, aside from components a) and b), and optionally
c) further customary additives selected from the group consisting of demolding agents, thermal stabilizers, antistats, pigments and/or brighteners,
does not contain any further components.

5. Use according to any of the preceding claims, wherein the maximum wall thickness of the molded article is 1.9 mm.

6. Use according to any of the preceding claims, wherein the polycarbonate includes at least 98 mol% of bisphenol A-based carbonate units, based on the total amount of carbonate units.

7. Use according to any of the preceding claims, wherein the molded article is a headlamp cover.

8. Use according to any of Claim 7, wherein the headlamp cover is part of a headlamp which, aside from the headlamp cover, comprises a light source which is an LED light source.

9. Use according to any of the preceding claims, wherein the injection molding process comprises the following steps:
(i) providing a composition based on aromatic polycarbonate, comprising
a) aromatic polycarbonate, where the polycarbonate has a weight-average molecular weight M_{w} of 22 000 g/mol to 27 000 g/mol, determined by means of gel permeation chromatography to DIN 55672-1:2007-08, calibrated against bisphenol A polycarbonate standards using dichloromethane as eluent, and where the polycarbonate includes 0 to not more than 19 mol% of carbonate units of the formula (1) 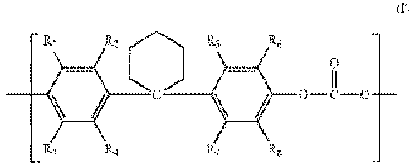 where R₁, R₂, R₃, R₄, R₅, R₆, R₇ and R₈ are independently H or C₁- to C₆-alkyl,
and
b) 0% to less than 0.2% by weight of a UV absorber or a UV absorber mixture, based on the total weight of the composition based on aromatic polycarbonate,
(ii) forming a molded article by injection molding of the molten composition based on aromatic polycarbonate from step (i), where the melt of the composition based on aromatic polycarbonate is at a temperature of greater than 300 to 380°C.

10. Use according to Claim 9, wherein the melt of the composition based on aromatic polycarbonate is at a temperature of greater than 330°C to 360°C.

11. Use according to Claim 9 or 10, wherein the specific injection pressure is not more than 2500 bar.

## Revendications

1. Utilisation d'une composition A à base d'un polycarbonate,
contenant
a) un polycarbonate aromatique, le polycarbonate présentant un poids moléculaire moyen en poids moyen M_{w} de 22 000 g/mole à 27 000 g/mole, déterminé par chromatographie à perméation de gel selon la norme DIN 55672-1:2007-08, étalonné par rapport à une référence de polycarbonate de bisphénol A en utilisant du dichlorométhane en tant qu'agent d'élution, et le polycarbonate présentant 0 à 19 % en moles, au plus, de motifs de type carbonate de formule (1), 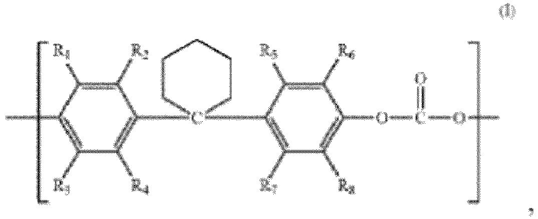 R₁, R₂, R₃, R₄, R₅, R₆, R₇ et R₈ signifiant indépendamment les uns des autres H ou C₁₋₆-alkyle,
et
b) 0 à moins de 0,2 % en poids d'un absorbant UV ou d'un mélange d'absorbants UV, par rapport au poids total de la composition de polycarbonate, pour l'augmentation du rapport parcours d'écoulement sur épaisseur de paroi lors de la préparation de pièces moulées transparentes au moyen d'un moulage par injection.

2. Utilisation selon la revendication 1, le rapport parcours d'écoulement sur épaisseur de paroi en ce qui concerne la pièce moulée étant de 180 à 500, en particulier de 250 à 500, préférablement de 190 à 450.

3. Utilisation selon la revendication 1 ou 2, la pièce moulée présentant une transmission à 400 nm, mesurée selon la norme ISO 13468-2:2006-07 sur une plaque plate de 4 mm d'épaisseur, supérieure à 65 %.

4. Utilisation selon l'une quelconque des revendications précédentes, la composition ne contenant, outre les composants a) et b) ainsi qu'éventuellement
c) d'autres additifs usuels choisis dans le groupe constitué par des agents de démoulage, des thermostabilisants, des antistatiques, des pigments et/ou des azurants,
aucun autre composant.

5. Utilisation selon l'une quelconque des revendications précédentes, l'épaisseur maximale de paroi de la pièce moulée étant de 1,9 mm.

6. Utilisation selon l'une quelconque des revendications précédentes, le polycarbonate présentant au moins 98 % en moles de motifs de type carbonate à base de bisphénol A, par rapport à la quantité totale de motifs de type carbonate.

7. Utilisation selon l'une quelconque des revendications précédentes, la pièce moulée étant un protège-phare.

8. Utilisation selon l'une de la revendication 7, le protège-phare étant une partie d'un phare, qui comprend, outre le protège-phare, une source de lumière qui est une source de lumière LED.

9. Utilisation selon l'une quelconque des revendications précédentes, le procédé de moulage par injection comprenant les étapes suivantes :
(i) mise à disposition d'une composition à base d'un polycarbonate aromatique, contenant
a) un polycarbonate aromatique, le polycarbonate présentant un poids moléculaire moyen en poids M_{w} de 22 000 g/mole à 27 000 g/mole, déterminé par chromatographie à perméation de gel selon la norme DIN 55672-1:2007-08, étalonné par rapport à une référence de polycarbonate de bisphénol A en utilisant du dichlorométhane en tant qu'agent d'élution, et le polycarbonate présentant 0 à 19 % en moles, au plus, de motifs de type carbonate de formule (1), 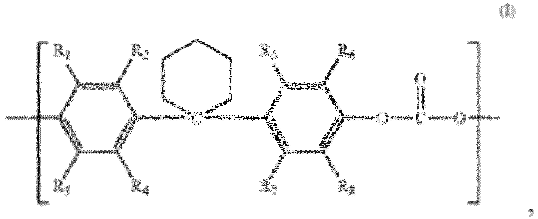 R₁, R₂, R₃, R₄, R₅, R₆, R₇ et R₈ signifiant indépendamment les uns des autres H ou C₁₋₆-alkyle,
et
b) 0 à moins de 0,2 % en poids d'un absorbant UV ou d'un mélange d'absorbants UV, par rapport au poids total de la composition à base d'un polycarbonate aromatique,
(ii) mise en forme d'une pièce moulée par moulage par injection de la composition fondue à base d'un polycarbonate aromatique de l'étape (i), la masse fondue de la composition à base d'un polycarbonate aromatique présentant une température allant de plus de 300 °C jusqu'à 380 °C.

10. Utilisation selon la revendication 9, la masse fondue de la composition à base d'un polycarbonate aromatique présentant une température allant de plus de 330 °C jusqu'à 360 °C.

11. Utilisation selon la revendication 9 ou 10, la pression d'injection spécifique étant de maximum 2 500 bars.
